# EUROPÄISCHE PATENTSCHRIFT

(11) **EP 1 998 876 B1**
(45) Veröffentlichungstag und Bekanntmachung des Hinweises auf die Patenterteilung: **04.01.2012**
(21) Anmeldenummer: 07726963.7
(22) Anmeldetag: 15.03.2007
(51) Int. Cl.: B01D 65/10, B01D 61/12, B01D 61/22, C02F 1/44

(54) **STEUERUNGEN EINES FILTRATIONSSYSTEMS**
CONTROLS OF A FILTRATION SYSTEM
COMMANDES D'UN SYSTEME DE FILTRATION

(30) Priorität: 16.03.2006 DE 102006012198
(43) Veröffentlichungstag der Anmeldung: 10.12.2008
(73) Patentinhaber: Seccua, GmbH, 86989 Steingaden (DE)
(72) Erfinder: HANK, Michael, 86989 Steingaden (DE)
(74) Vertreter: Dilg, Andreas
(86) Internationale Anmeldenummer: PCT/EP2007/052477
(87) Internationale Veröffentlichungsnummer: WO 2007/104797

(56) Entgegenhaltungen:
- EP-A1- 0 139 202
- WO-A-01/16030
- WO-A-01/39870
- WO-A-94/11721
- WO-A-96/28236
- WO-A1-2004/085027
- DE-A1- 4 239 937
- DE-A1- 10 135 295
- US-A- 4 701 861
- US-A- 5 174 901
- US-A- 5 817 231
- US-A1- 2004 007 527
- US-B2- 6 829 551

## Beschreibung

Die Erfindung betrifft eine Filtrationsanlage zum Filtern eines Fluids, ein Verfahren zum Steuern einer Filtrationsanlage zum Filtern eines Fluids, ein computerlesbares Speichermedium und ein Programm-Element.

Die Ultrafiltration bezeichnet eine Technik zur Abtrennung von (makromolekularen) Substanzen bzw. zur Aufkonzentrierung derselben. Ultrafiltrationstechniken kommen auch zum Einsatz, um Trinkwasser aufzubereiten, zum Beispiel zur Entfernung von Bakterien oder Viren, bevor Trinkwasser einem Endverbraucher bereitgestellt wird.

Man unterscheidet Mikrofiltration und Ultrafiltration über den Grad der Abtrennung. Werden Partikel mit der Größe 0.5 µm bis 0.1 µm abgetrennt, spricht man von Mikrofiltration, sind die Partikel 0.1 µm bis 0.01 µm groß, dann bezeichnet man es als Ultrafiltration.

Bekannte Ultrafiltrationssystem zur Aufbereitung von Trinkwasser leiden an einer teilweise verbesserungsbedürftigen Zuverlässigkeit, insbesondere wenn es zu einer Schädigung der Membran kommt oder wenn die Qualität des zu filtrierenden Wassers schwankt, z.B. durch Witterungseinflüsse.

US 5,476,592 offenbart eine Blutliltrationsinstallation. Ein Injektionsgerät der Blutfiltrationsinstallation enthält Mittel zum Überprüfen der Integrität eines Hauptfilters während einer Blutfiltration. Diese Überprüfungsmittel enthalten ein zweites Filter zum Zurückhalten von Bakterien. Zwei Drucksensoren sind an das Sekundärfilter angeschlossen. Die Signale der Drucksensoren werden einer Steuereinheit zugeführt, die einen Differenzdruck berechnet und diesen mit einem Schwellwert vergleicht. Falls eine Membran des Hauptfilters beschädigt ist, können Bakterien in das zweite Filter eingebracht werden. Ein resultierendes Verstopfen führt zu einer Erhöhung der Druckdifferenz zwischen den beiden Seiten des Sekundärfilters. Wenn diese Differenzdruck einen Schwellwert erreicht, triggert die Steuereinheit Alarmierungsmittel und bewirkt ein Stoppen einer Pumpe.

US 6,649,063 B2 offenbart ein medizinisches Therapiesystem zum Erzeugen einer sterilen Ersatzflüssigkeit. Ein entsprechender Filter kann mittels eines Integritätstests getestet werden, um sicherzustellen, dass die Ersatzflüssigkeit während der Sterilisierung ordnungsgemäß gefiltert wurde.

US 2004/0079700 A1 offenbart ein Verfahren zum Testen der Integrität einer Membran. Hierfür wird einer Membran ein Zuführstrom einer Lösung einer bekannten Konzentration zugeführt. Die stromabwärts (bzw. permeatseitig) vorliegende Konzentration dieser Lösung kann detektiert werden, um festzustellen, ob ein Defekt in der Membran existiert.

DE 690 30 992 T2 offenbart, bei häuslichen Dialysebehandlungen, bei denen nicht vorgesehen ist, ununterbrochen einen Spezialisten (Arzt oder Krankenschwester) zur Überwachung des Behandlungsablaufs einzusetzen, eine Empfangsvorrichtung zu Hilfe zu nehmen, die mit einer Dialysevorrichtung beispielsweise über eine Telefonleitung verbunden ist, um eine Überwachung der Dialysevorrichtung aus der Entfernung und ohne Unterbrechung durchzuführen.

WO 96/28236 offenbart ein Verfahren und eine Vorrichtung zum Bestimmen eines Verunreinigungseffekts eines Zuführstroms auf einen bekannte Eigenschaften aufweisenden Filter. Das Verfahren weist ein Durchleiten des Zuführstroms durch einen bekannte Eigenschaften aufweisenden Filter, ein Bestimmen der Veränderung des Widerstands beim entweder kontinuierlichen oder in mehreren Zeitintervallen Strömen des Zuführstroms entlang des Filters und basierend auf diesen Daten ein Berechnen des Zuführverunreinigungsindexes (FFI) auf, der für die Verunreinigungseigenschaften des Zuführstroms bezüglich des Filters repräsentativ ist.

DE 101 35 295 A1 offenbart eine Prüfvorrichtung für Filtersysteme, umfassend zumindest zwei Testeinheiten, eine Verwaltungseinheit zum Verwalten und Regeln bzw. Steuern der zumindest zwei Testeinheiten und Signalverbindungen über ein bi- oder multidirektionales Netzwerk zwischen der Verwaltungseinheit und den zumindest zwei Testeinheiten, insbesondere zum Übertragen von Testprogrammbefehlen und Testergebnissen.

US 5 174 901 A offenbart in einem System zum Reinigen einer Flüssigkeit ein Verfahren, bei dem die Flüssigkeit dadurch vorbehandelt wird, dass sie durch einen Sandfilter-Wasserenthärter und einen Kohlefilter zur Entfernung von Härte und partikelförmigen Material hindurch läuft. Die Flüssigkeit wird dann durch eine Umkehrosmose-Membran zur Entfernung von organischen Verbindungen und ionisierten und biologischen Unreinheiten gepumpt. Die Flüssigkeit läuft von der Umkehrosmose-Membran durch ein stark säurehaltiges Kationenaustauschharz zur Entfernung der Kationen, die in dem Abwasser der Umkehrosmose vorhanden sind. Die saure Flüssigkeit wird dadurch neutralisiert, dass sie durch Kalziumcarbonat läuft, und es wird dem Wasser dadurch Kalziumsalz und Kohlenstoff-haltige Säure für einen besseren Geschmack des mit Kalzium angereicherten Produkts hinzugefügt.

US 5 817 231 A offenbart eine Vorrichtung zum Reinigen von Eingangswasser und zum Ausgeben einer Benutzer ausgewählten Menge von gereinigtem Wasser in einen tragbaren Behälter in Antwort auf ein Einzahlen einer vorbestimmten Menge Geld. Die Vorrichtung weist einen ersten Weg von gereinigtem Wasser und einen zweiten Weg von gereinigtem Wasser auf. Der erste Weg von gereinigtem Wasser weist einen Umkehrosmose-Filter und einen Speichertank auf. Der zweite Weg von gereinigtem Wasser weist eine Ultraviolett-Sterilisationseinheit auf, die zwischen dem Tank und einer Ausgabeeinheit mit einer oder mehr Ausgabeventilen verbunden ist. Ein Rückzirkulations-Wasserweg zirkuliert periodisch Tankwasser durch die ultraviolette Sterilisationsvorrichtung, um die Reinheit davon zu verbessern und zu erhalten. Ein weiterer Wasser-Rückzirkulationsweg kann vorgesehen sein, um Konzentrat von dem Umkehrosmose-Filter zu einer Filtereingangsleitung zurück zu zirkulieren, wo es mit dem Eingangswasser gemischt wird.

Es ist eine Aufgabe der vorliegenden Erfindung, ein zuverlässiges Filtersystem bereitzustellen.

Diese Aufgabe wird durch eine Filtrationsanlage gemäß Anspruch 1 zum Filtern eines Fluids, durch ein Verfahren zum Steuern einer Filtrationsanlage zum Filtern eines Fluids gemäß Anspruch 11, durch ein

Die WO2004/085027 offenbart eine unidirektionale Überwachung einer Filtrationsanlage über einen Mobilfunkpfad computerlesbares Speichermedium gemäß Anspruch 12 und durch ein Frogramm-Element gemäß Anspruch 13 gelöst.

Gemäß der vorliegenden Erfindung ist eine Filtrationsanlage zum Filtern eines Fluids geschaffen, wobei die Steuereinrichtung eine Integritätstesteinheit zum Durchführen eines Integritätstests zum Überprüfen der Funktionsfähigkeit der Filtrationsanlage und eine Reaktionseinheit zum Ermitteln (und ggf. Initiieren und/oder Durchführen) einer Reaktion basierend auf einem Ergebnis des Integritätstests aufweist.

Gemäß der vorliegenden Erfindung ist ein Verfahren zum Steuern einer Filtrationsanlage zum Filtern eines Fluids geschaffen, wobei das Verfahren das Durchführen eines Integritätstests zum Überprüfen der Funktionsfähigkeit der Filtrationsmembran und das Ermitteln einer Reaktion basierend auf einem Ergebnis des Integritätstests aufweist.

Gemäß der vorliegenden Erfindung ist ein computerlesbares Speichermedium (z.B. ein integrierter Speicher, eine CD, eine Diskette, eine Festplatte, ein USB-Stick, eine Memory Card) geschaffen, in dem ein Programm zum Steuern einer Filtrationsanlage zum Filtern eines Fluids gespeichert ist, das, wenn es von einem Prozessor ausgeführt wird, das oben beschriebene Verfahren steuert oder durchführt.

Gemäß der vorliegenden Erfindung ist ein Programm-Element zum Steuern einer Filtrationsanlage zum Filtern eines Fluids geschaffen, das, wenn es von einem Prozessor ausgeführt wird, das oben beschriebene Verfahren steuert oder durchführt.

Ausführungsbeispiele der Erfindung können sowohl mittels eines Computerprogramms, d.h. einer Software, als auch mittels einer oder mehrerer spezieller elcktrischer Schaltungen, d.h. in Hardware oder in beliebig hybrider Form, d.h. mittels Software-Komponenten und Hardware-Komponenten, realisiert werden.

Gemäß der Erfindung ist eine Steuer- oder Regeleinrichtung für eine Filtrationsanlage, zum Beispiel für eine Ultrafiltrationsanlage zum Aufbereiten von Trinkwasser, bereitgestellt, die (beispielsweise in vorbestimmten Zeitintervallen) automatisiert einen integritätstest durchführt, bei dem überprüft werden soll, ob die Filtrationsanlage bzw. bestimmte Komponenten davon funktionsfähig ist/sind oder nicht. Abhängig von dem Ergebnis eines solchen automatisierten Integritätstests kann eine Reaktionseinheit das Gesamtsystem entsprechend steuern, zum Beispiel die Trinkwasseraufbereitung bei Feststellen eines Problems abschalten und/odcr einen Benutzer zum Beispiel über eine Mobilfunkverbindung über die mangelnde oder drohende Funktionsunfähigkeit oder Betriebsstörung der Filtrationsanlage unterrichten. Dadurch kann die Betriebssicherheit des Systems erheblich verbessert werden und auch bei Abwesenheit eines menschlichen Benutzers sichergestellt werden, dass eine Wasseraufbereitungsanlage fehlerfrei funktioniert.

Die Erfindung wird im Rahmen einer Kleinanlage für die Trinkwasseraufbereitung eingesetzt. Unter dem Begriff "Kleinanlage" werden Anlagen mit einer Dimensionierung zur Wasseraufbereitung für den Bedarf eines Haushalts, einer Wohnanlage, eines oder mehrerer (eventuell abgelegener) Gehöfte, einer Schwimmbadwasseraulbereitung oder auch einer Wasseraufbereitung am Ort der Verwendung, z.B. in öffentlichen Duschen und Bädern, verstanden. Eine solche Kleinanlage kann zum Beispiel eine Wassermenge auch von nur 60 l/h (zum Beispiel zur Versorgung eines nur vorübergehend genutzten Ferienhauses) bereitstellen.

Zum Beispiel kann die Filtrationsanlage unter Verwendung von sogenannten Ultrafiltrationsmembranen eingesetzt werden, insbesondere Membranen, die eine Porengröße im Bereich von ungefähr 10 bis ungefähr 20 nm, beispielsweise 15 nm, aufweist. Eine solche Maschenweite kann sicherstellen, dass Bakterien und Viren von einem solchen Filter erfasst werden und somit eine hohe Trinkwasserqualität erreicht werden kann.

Solche Ultrafiltrationsanlagen können klassische Chloranlagen oder UV-Anlagen ersetzen oder ergänzen. Damit kann auch im Falle von chlarresistenten Keimen bzw, solchen Keimen, die in Kontakt mit UV-Strahlung nicht ausreichend sicher zerstört werden, eine einwandfreie Trinkqualität sichergestellt werden.

Ausführungsbeispiele der Erfindung können in Kleinanlagen, wie zum Beispiel Bauerhöfen, Gasthöfen in den Bergen, Hotels, etc. besonders vorteilhaft zum Einsatz kommen, insbesondere überall dort, wo eine dezentrale Wasserversorgung implementiert werden soll.

Die eigentliche Filtercharakteristik der Filtrationsantage kann unter Verwendung eines Membranfilters oder einer Mehrzahl von Membranfiltern erfolgen. Zum Beispiel kann eine Mehrzahl (zum Beispiel sieben) solcher Membranfilter zu einer gemeinsamen Membran-Vorrichtung zusammengefasst sein, was die Stoßfestigkeit und die Robustheit gegen Zerstörung erhöht. Der Durchmesser einer Einzelmembran kann zum Beispiel 0.85 mm betragen, kann aber durchaus variieren. Die Membranen können kapillarartig oder als Flachmembran vorgesehen sein, d.h. als hohlzylinderförmige Strukturen oder in Taschen verarbeitet oder auf Träger aufgeschweißt oder aufgeklebt, wobei zu reinigendes Wasser durch die Membran strömt und beim Durchströmen der Membran Keime oder Trübungselemente aus dem Wasser entfernt werden.

In einem alternativen Betriebsmodus einer solchen Membran kann die Durchflussrichtung umgekehrt werden, um von der Membran abgefilterte Keime oder Trübungselemente aus der Membran auszuspülen, um eine Verstopfung der Membran zu vermeiden bzw. um eine Membran zu säubern. Ferner kann auch eine Spülung entlang der Membran erfolgen, d.h. ein Befördern von Fluid entlang der Membranfläche, so dass von der Membran zuvor gefilterte Keime oder Trübungselemente anschaulich von der Membran weggerissen werden und somit eine Regenerierung der Membran erreicht werden kann.

Gemäß der Erfindung wird ein Integritätstest durchgeführt. Unter dem Begriff "Integritätstest" wird ein Funktionstest der Membran, die in einer solchen Filtrationsanlage zum Einsatz kommen kann, verstanden. Der Integritätstest kann die Aufgabe haben, zu ermitteln, ob die Membran fehlerfrei funktioniert oder ob die Membran zum Beispiel durch Verstopfung oder Lochbildung geschädigt oder in ihrer Leistungsfähigkeit eingeschränkt ist.

Um ein solches Loch in einer Membran zu ermitteln, welches dann unerwünschterweise auch als Durchflusskanal für eigentlich abzufilternde Trübungselemente oder Keime dient, kann zum Beispiel eine Testsubstanz, wie zum Beispiel Aktivkohle, entlang oder durch die Membran gepumpt werden und überprüft werden, ob diese Aktivkohle die Membran passiert und daher hinter dem Membran detektiert werden kann. Ist dies der Fall, d.h. können Aktivkohlepartikel mit einer Größe größer als die Porenweite der Membran (zum Beispiel 15 nm) durch die Membran gelangen, so ist das Ergebnis des Integritätstests, dass die Membran Löcher aufweist und daher fehlerhaft ist.

Alternativ oder ergänzend kann ein Überdruck oder Unterdruck an die Membran angelegt werden, zum Beispiel 1 bar, mit einem Medium, das das Wasser aus der Membran verdrängen soll, z.B. Luft oder ein anderes Gas (beispielsweise Kohlendioxid, zum Beispiel in Kartuschenform). In der Membran vorliegendes Wasser geht bei einem solchen Druck aufgrund von herrschenden Bindungskräften nicht aus der Membran heraus. Nur durch Löcher oder sonstige Fehlstellen der Membran kann daher die Luft oder das Gas, die mit Über- oder Unterdruck angelegt ist, durch die Membran gelangen. Der Druckabfall kann über die Zeit gemessen werden, und wenn er pro Zeitintervall einen vorgebbaren Grenzwert überschreitet, kann die Membran als fehlerhaft klassifiziert werden und mittels der Reaktionseinheit ein Abschalten der Filtrationsanlage und/oder das Ausgeben eines Alarms initiiert werden.

Ein anderes Ausführungsbeispiel für einen solchen Integritätstest ist das Messen einer Druckdifferenz über die Membran während des Filtrationsbetriebs. Bei dieser Art von Integritätstest wird überwacht, ob eine sprunghafte Veränderung des Überdruckes oder Unterdruckes während eines Filtrations- oder Reinigungsprozesses der Membran auftritt, bei dem sich die Differenzdrücke über die Membran ansonsten nur kontinuierlich verändernd oder konstant bleiben. Die Beschädigung der Membran führt zu einem Loch in der Membran, das wesentlich größer als die Porengröße (z.B. 15 nm) ist, und daher verändert sich der Differenzdruck über die Membran sprunghaft. Es kann ermittelt werden, ob ein entsprechender Druckausgleich aufgrund einer Schädigung der Membran erfolgt.

Bei einer Filtrationsanlage, insbesondere bei einer Ultrafiltrationsanlage, ist ein solcher Integritätstest besonders wichtig, da das Einsetzen von Membranen zwar signifikante Vorteile wie eine gute Funktionalität hinsichtlich des Abfilterns von Keimen bietet, aber auf der anderen Seite anfällig gegen das Einreißen der Membran sein kann, wodurch unbemerkt die Filterqualität und dadurch die Wasserqualität verschlechtert werden kann. Daher ist insbesondere bei einer als Filtrationsanlage ausgestalteten Wasseraufbereitungsanlage das regelmäßige Durchführen von Integritätstests Voraussetzung für eine hohe Zuverlässigkeit und für eine gleichbleibend hohe Wasserqualität.

Wird bei dem Integritätstest festgestellt, dass die Funktionsfähigkeit der Filtrationsmembran, nicht ausreichend ist, so kann eine Reaktionseinheit in Reaktion auf ein solches Ereignis den Betriebszustand der Filtrationsanlage entsprechend einstellen. Zum Beispiel kann der Wasserdurchfluss automatisch abgesperrt werden, indem ein Zufluss unterbrochen wird (zum Beispiel Ventile geschlossen oder Pumpen ausgeschaltet werden), ein Ablauf unterbrochen wird (zum Beispiel Ventile geschlossen oder Pumpen ausgeschaltet werden), oder sonstige Modifikationen an der Filtrationsanlage oder durch die Filtrationsanlage an der unmittelbaren Peripherie (z.B. mittels vor- oder nachgeschalteten, aber nicht in die Anlage integrierten Pumpen oder Ventilen) vorgenommen werden.

Ergänzend wird ein Anwender mittels einer Fernstreckenbenachrichtigung darüber in Kenntnis gesetzt, dass die Filtrationsanlage nicht einwandfrei arbeitet. Dies erfolgt Beispiel über eine SMS oder eine MMS.

Nur wenn der Integritätstest fehlerfrei durchgerührt wird, darf die Anlage in Betrieb bleiben. Nach Abschalten einer Anlage kann ein besonderer Integritätstest durchgeführt werden, wobei nur bei erfolgreichem Bestehen dieses besonderen Integritätstests die Anlage wieder in Betrieb gesetzt werden kann.

Vorteilhaft kann eine Steuereinrichtung in ein bereits bestehende System, d.h. in eine bestehende Filtrationsanlage, nachträglich eingebaut werden. Insofern kann die Steuereinrichtung als nachrüstbarer Retrofitsatz oder als Kit geliefert werden bzw. als ein solcher verwendet werden. Erfindungsgemäß kann es ausreichend sein, lediglich die Ansteuerung der Komponenten der Filtrationsanlage zu modifizieren, sodass der die Fluidmechanik betreffende Teil (Pumpen, Ventile, Membrane, etc.) unverändert bleiben kann. Alternativ können auch diese Komponenten erfindungsgemäß angepasst werden.

Insbesondere bei einer Porengröße kleiner als ungefähr 20 nm der Ultrafiltrationsmembran ist es möglich, Viren aus dem aufzubereitenden Wasser zu entfernen. Auch Bakterien, wie zum Beispiel *E*. *coli* oder auch Parasiten wie z.B. Legionellen können bei einer solchen Porengröße zuverlässig aus dem aufzubereitenden Trinkwasser entfernt werden.

Unter dem Begriff "Fluid" wird im Rahmen dieser Anmeldung insbesondere jede Flüssigkeit oder jedes Gas, bzw. Mischungen einer solchen Flüssigkeit oder eines solchen Gases mit einer anderen Flüssigkeit, einem anderen Gas oder einem Festkörper verstanden werden.

Erfindungsgemäß werden Alarmmeldungen per SMS oder MMS ausgegeben, um den Benutzer darüber zu informieren, dass seine Wasseraufbereitung nicht mehr einwandfrei funktioniert.

Gemäß einem exemplarischen Ausführungsbeispiel kann die Filtration bei defekten Membranen abgeschaltet werden, sodass kein potentiell verkeimtes Wasser ins Leitungsnetz gelangen kann. Sollte ein, entweder von der Anlage automatisch oder manuell (zum Beispiel Druckhaltetest wie integriert oder Differenzdruckmessungen, oder Dosierung von Partikeln im Zulauf und Partikelzählung oder Trübungsmessungen oder andere) durchgeführter Integritätstest der Membran anzeigen, dass die Membran defekt ist und die geforderte Rückhalteleistung für Partikel, Bakterien, Viren, Parasiten oder andere Verunreinigungen nicht mehr erfüllt, so kann die Anlage dafür sorgen, dass kein potentiell verkeimtes Wasser durch die defekten Filter ins Trink- oder Brauchwassernetz gelangen kann.

Ferner kann die Anlage dafür sorgen, dass durch Ausschalten oder Ausstecken der Anlage diese Schaltung nicht umgangen werden kann. Erst nach wiederholtem positivem Integritätstest kann die Versorgung wieder erfolgen.

Insbesondere kann erfindungsgemäß ein komplexes Steuerungssystem integriert und verkleinert werden bzw. "on-chip" bzw. "on-board" vorgesehen werden, zum Beispiel auf eine CPU mit allen elektronischen Komponenten wie AD-Wandlern, Kommunikationsgeräten, Benutzerschnittstellen, etc.

Als nächstes werden weitere exemplarische Ausgestaltungen der Erfindung beschrieben.

Zunächst werden exemplarische Ausgestaltungen der Steuereinrichtung beschrieben. Allerdings gelten diese Ausgestaltungen auch für die Filtrationsanlage zum Filtern eines Fluids, für das Verfahren zum Steuern einer Filtrationsanlage zum Filtern eines Fluids, für das computerlesbare Speichermedium und für das Programmelement.

Die Integritätstesteinheit ist zum automatischen Durchführen des Integritätstests eingerichtet. Zum Beispiel kann die Integritätstesteinheit in regelmäßigen Abständen (zum Beispiel einmal pro Stunde, einmal am Tag, etc.) selbsttätig die Funktionsfähigkeit der Anlage überprüfen. Ergänzend kann die Integritätstesteinheit einen Integritätstest bei einer entsprechenden Weisung durch einen menschlichen Benutzer durchführen.

Die Integritätstesteinheit ist zum Durchrühren des Integritätstests zum Überprüfen der Funktionsfähigkeit einer Filtermembran zum Filtern des Fluids eingerichtet. Eine Filtermembran stellt bei einer Filtrationsanlage ein eher schwächeres und fehleranfälliges Glied dar. Wenn die Filtermembran defekt ist, können Keime ungeschützt in das Trinkwasser gelangen. Daher ist eine Überprüfung der Filtermembran besonders wichtig, um eine einwandfreie Trinkwasserqualität sicherzustellen.

Die Integritätstesteinheit kann zum Überprüfen der Funktionsfähigkeit der Filtermembran mittels Beförderns einer im funktionsfähigen Zustand der Filtermembran für die Filtermembran impermeablen Testsubstanz eingerichtet sein. Zum Beispiel kann Aktivkohle oder eine andere Substanz durch die Membran geleitet werden, mit einer Größe, die für eine defektfreie Filtrationsmembran undurchlässig ist. Gelangt dennoch diese Testsubstanz durch die Membran hindurch, was mittels einer entsprechenden Detektionseinheit erfasst werden kann, so ist von einer defekten Filtermembran auszugehen, und der Integritätstest fällt negativ aus.

Alternativ oder ergänzend kann die Integritätstesteinheit zum Überprüfen der Funktionsfähigkeit der Filtermembran mittels Anlegens eines Testdrucks an die Filtermembran und mittels Messens des Zeitverhaltens des Testdrucks an der Filtermembran eingerichtet sein. Zum Beispiel kann ein Testdruck von einem oder mehreren bar angelegt werden, was im Falle des Bindens von Wassermolekülen in den Poren der Membran dazu führt, dass eine fehlerfreie Membran diesen Druck relativ lange aufrechterhält. Enthält die Membran jedoch ein Loch, so erfolgt der Druckabbau über die Membran relativ schnell, sodass durch eine Messung der Zeitabhängigkeit des Druckverlaufs auf die Funktionsfähigkeit geschlossen werden kann. Als Entscheidungskriterium kann definiert werden, dass genau dann, wenn der Druckabfall schneller als ein entsprechender Schwellwert erfolgt, die Membran als fehlerhaft klassifiziert wird.

Die Reaktionseinheit kann im Falle einer, mittels der Integritätstesteinheit ermittelten fehlenden Funktionsfähigkeit der Filtrationsanlage als Reaktion zumindest einen Teil der Filtrationsanlage abschalten. Enthält die Filtrationsanlage mehrere parallele Pfade, zum Beispiel mehrere Membrane, die unabhängig voneinander Wasser filtern, so kann auch nur der Teil der Filtrationsanlage abgeschaltet werden, in dem ein Defekt detektiert worden ist. Dadurch kann auch in einem Fehlerzustand eine Aufrechterhaltung der Trinkwasserversorgung sichergestellt werden.

Die Reaktionseinheit generiet im Falle einer mittels der Integritätstesteinheit ermittelten fehlenden Funktionsfähigkeit der Filtrationsanlage als Reaktion eine Alarmmeldung. Eine solche Alarmanmeldung kann ein optischer oder akustischer Alarm sein. Die Alarmmeldung wird alternativ oder ergänzend aber auch an einer, an einem entfernten Ort befindlichen Kommunikationseinheit (z.B. an einem Handy) erfolgen.

Zu diesem Zweck enthält die Alarmmeldung eine Fernstreckenbenachrichtigung eines Benutzers. Diese Fernstreckenbenachrichtigung erfolgt mittels eines Mobilfunknetz Kommunikationspfads. Es wird eine SMS oder MMS an einen Benutzer übermittelt werden, mit dem Inhalt, dass die Filtrationsanlage des Benutzers defekt ist.

Die Steuereinrichtung kann ferner eine Wiederinbetriebnahmeeinheit aufweisen, die zum Ermitteln einer wiederhergestellten Funktionsfähigkeit der Filtrationsanlage nach einer Fehlfunktion und zur Wiederinbetriebnahme der Filtrationsanlage eingerichtet sein kann. Ist ein Fehler festgestellt und beseitigt worden, so kann zunächst einer oder können mehrere Integritätstests durchgeführt werden, um sicherzustellen, dass die reparierte Anlage wieder funktionsfähig ist. Nur wenn dieser oder diese Tests erfolgreich ist oder sind, kann die Anlage wieder in Betrieb genommen werden.

Ferner kann die Steuereinheit eine Funktion enthalten, die es dem Benutzer erlaubt, bei festgestellter, defekter Membran und nach Benachrichtigung durch die Steuereinrichtung, die Filtration für einen festgelegten und begrenzten maximalen Zeitraum, z.B. 2 Tage, fortzusetzen, um die Versorgung mit Trinkwasser solange sicherzustellen, bis die Filtereinheiten erneuert oder repariert werden können.

Die Steuereinrichtung ist bidirektional kommunizierfähig mit einem an einem entfernten Ort befindlichen Benutzer eingerichtet. Ist der Benutzer über eine Fernstreckenverbindung von einem möglichen Defekt der Filtrationsanlage in Kenntnis gesetzt worden, so kann der Benutzer die Steuereinrichtung über die Fernstreckenverbindung mit der Instruktion versorgen, dass die Filtrationsanlage ungeachtet des möglichen Defekts weiter im Einsatz bleiben soll. Eine andere Instruktion ist das Abschalten der Filtrationsanlage oder die Anweisung, einen zusätzlichen Funktionstest durchzuführen.

Es ist über eine Kommunikationsverbindung zwischen Steuereinrichtung und Benutzer ferner möglich, andere Betriebsdaten der Filtrationsanlage (z.B. aktuelle Fördermenge, etc.) zu übermitteln.

Auch kann die gefilterte Wassermenge als Basis für die Berechnung einer Gebühr für die Benutzung der Filtrationsanlage verwendet werden, und die berechnete Mietgebühr kann an den Benutzer zum Beispiel per SMS übermittelt werden, so dass ein automatisiertes Abrechnungssystem implementiert werden kann.

Die Steuereinrichtung kann als monolithisch integrierter Schaltkreis eingerichtet sein. Zum Beispiel können alle oder kann ein Teil der Komponenten der Steuereinrichtung in einem integrierten Schaltkreis vorgesehen sein, zum Beispiel in einem mittels der Siliziumtechnologie hergestellten integrierten Schaltkreis. Statt Siliziumtechnik kann auch ein anderer Gruppe-IV Halbleiter, zum Beispiel Germanium, als Substrat in Frage kommen. Gruppe-III-V-Halbleitersysteme, zum Beispiel Galliumarsenid, können ebenfalls zum Einsatz kommen. Mittels eines monolithisch integrierten Schaltkreises kann die Steuereinrichtung miniaturisierbar fertigbar sein und platzsparend und kostensparend untergebracht werden.

Die Steuereinrichtung kann als Nachrüstsatz zum Einbau in eine bestehende Filtrationsanlage eingerichtet sein bzw. als Nachrüstsatz zum Einbau in eine bestehende Filtrationsanlage verwendet werden. Die Steuereinrichtung kann somit nur diejenigen Komponenten modulartig ersetzen, die gegenüber einer herkömmlichen Filtrationsanlage erfindungsgemäß ersetzt werden müssen. Zum Beispiel kann lediglich eine CPU oder ein integrierter Schaltkreis ersetzt werden, was keinerlei besonderes Fachwissen beim Austausch eines solchen Systems zum Nachrüsten in eine bestehende Filtrationsanlage erfordert.

Im Weiteren werden Ausgestaltungen der Filtrationsanlage beschrieben. Allerdings gelten diese Ausgestaltungen auch für die Steuereinrichtung, für das Verfahren, für das computerlesbare Medium und für das Programmelement.

Die Filtrationsanlage kann mindestens eine Filtrationsmembran in Form einer Hohlfaser oder einer Plattenmembran oder einer Membrantasche, etc. zum Filtern des Fluids aufweisen. Es können auch eine Mehrzahl von Hohlfasern zu einer Einheit zusammengefasst werden, zum Beispiel sieben oder mehr in einer Membranfasern, wobei beliebig viele solcher Membranfasern in einem gemeinsamen Modul vorgesehen sein können. Es kann eine oder es können mehrere parallele Pfade von Filterprozeduren ablaufen, sodass auch bei Fehlschlägen eines Pfades auf die restlichen Pfade zurückgegriffen werden kann.

Mindestens eine Filtermembran kann aus einer Gruppe ausgewählt sein, die aus einer Feinfiltermembran, einer Mikrofiltermembran, einer Ultrafiltermembran und einer Nanofiltermembran besteht. Abhängig von der Porengröße kann ein Feinfilter (zum Beispiel ein Sandfilter), ein Mikrofilter (zum Beispiel bis zu einer Porengröße von 0.1 µm zur Bakterienentfernung), ein Ultrafilter (zum Beispiel bis zu einer Porengröße von 10 nm, zur Entfernung von Viren), ein Nanofilter (mit einer Porengröße bis 1 nm) und ein dynamischer Filter (die Porengröße eines dynamischen Filters wird zum Beispiel durch die Wasserinhaltsstöffe determiniert) unterschieden werden. Ausführungsbeispiele der Erfindung können für jede dieser Größenordnungen vorteilhaft eingesetzt werden, sind aber insbesondere bei Ultrafiltrationsfiltern angesichts der hohen Gefährlichkeit von Viren in aufzubereitendem Trinkwasser vorteilhaft einsetzbar.

Die Filtrationsanlage kann einen Zuflussanschluss zum Zuführen des zu filternden Fluids zu der Filtermembran aufweisen. Beispielsweise kann der Zuflussanschluss an das öffentliche Wassernetz angeschlossen sein, und kann aus dem öffentliche Wassernetz Wasser bereitstellen, das nachfolgend zu filtern ist.

Ferner kann die Filtrationsanlage einen Filterfluidanschluss zum Abführen des mittels der Filtermembran gefilterten Fluids aufweisen. Ein solcher Filterfluidanschluss ist von dem Zuflussanschluss durch die Filtermembran getrennt, sodass nur das gefilterte Wasser über den Filterfluidanschluss zur Wasserversorgung der angeschlossenen Entität, zum Beispiel eines Privathaushalts, vorgesehen ist. Ferner kann die Filtrationsanlage einen Abflussanschluss zum Abführen von Fluid aufweisen, das die Filtermembran nicht durchströmt hat. Ein solcher Abfluss ist erforderlich, um beispielsweise bei Detektieren einer Fehlfunktion der Membran kontaminiertes Wasser abzuführen, oder um bei Spülvorgängen zum Reinigen der Membran das verunreinigte Reinigungswasser abzuführen oder um zumindest einen Teil des durch den Zuflussanschluss zugeführten Wassers ständig wieder in den Zufluß der Anlage zu rezirkulieren (z.B. beim Einsatz der Anlage in einem Batch - Prozeß).

Darüber hinaus kann die Filtrationsanlage mindestens ein Ventil (zum Beispiel ein Magnetventil oder ein mittels eines Fluidflusses steuerbares Ventil), vorzugsweise eine Vielzahl solcher Ventile aufweisen, wobei mittels des oder der Ventile die Betriebszustände von Zuflussanschluss, Filterfluidanschluss und Abflussanschluss einstellbar sind. Somit kann eine Fluidströmrichtung definiert werden, indem die Ventile mittels der Steuereinrichtung entsprechend angesteuert werden.

In einem Filtermodus kann das Fluid von dem Zuflussanschluss durch die mindestens eine Filtermembran zu dem Filterfluidanschluss gelangen, sodass auf diese Art und Weise an dem Filterfluidanschluss Trinkwasser bereitgestellt ist. In einem Membranspülmodus kann das Fluid von dem Zuflussanschluss entlang der mindestens einen Filtermembran zu dem Abflussanschluss strömen, sodass eine Membranfläche gespült wird und anschaulich zuvor weggefilterte Partikel der Membran von dieser weggerissen werden, um die Membran zu reinigen und für einen erneuten Filtervorgang zu regenerieren. In einem Rückflussmodus zum Befördern des Fluids von dem Filterfluidanschluss durch die mindestens eine Filtermembran zu dem Abflussanschluss durchströmt das Fluid anschaulich eine entgegengesetzte Strömrichtung, verglichen mit dem Filtermodus, sodass Wasser in umgekehrter Richtung die Membran durchströmt und an der Austrittsfläche der Membran möglicherweise befindliche Verunreinigungen entfernt, um die Membran zu regenerieren.

Die Filtrationsanlage kann eine oder mehrere Pumpen zum Befördern des Fluids durch die Filtrationsanlage aufweisen. Eine solche Wasserpumpe kann beispielsweise unidirektional oder bidirektional funktionieren.

Die Filtrationsanlage kann als Kleinanlage zur Trinkwasseraufbereitung eingerichtet sein. Insbesondere kann sie zum Versorgen eines, einzelner oder weniger Privathaushalte mit Trinkwasser eingerichtet sein. Somit eignet sich eine solche Filtrationsanlage für eine dezentrale Wasserversorgung, zum Beispiel in abgeschiedenen Bergdörfern, einsamen Gehöften, Berghütten. Die Filtrationsanlage kann aber auch in sanitäre Einrichtungsgegenstände integriert werden (z.B. in Duschen) und dort eingesetzt werden, wo eine Entkeimung des Wassers unmittelbar an der Entnahmestelle notwendig ist, um eine Wiederverkeimung des Rohrnetzes hinter der Filteranlage (z.B. durch Legionellen) zu vermeiden.

Im Folgenden werden exemplarische Ausführungsbeispiele der vorliegenden Erfindung mit Verweis auf die folgenden Figuren detailliert beschrieben.
Fig. 1 zeigt eine Filtrationsanlage zum Filtern von Wasser gemäß einem exemplarischen Ausführungsbeispiel der Erfindung.
Fig. 2 zeigt zwei Ansichten einer Filtrationsanlage gemäß einem exemplarische Ausführungsbeispiel der Erfindung.
Fig. 3 zeigt zwei Ansichten einer Filtrationsanlage gemäß einem exemplarischen Ausführungsbeispiel der Erfindung.
Fig. 4 ist eine schematische Darstellung einer Filtrationsanlage zum Filtern von Wasser gemäß einem exemplarischen Ausführungsbeispiel der Erfindung.
Fig. 5 zeigt eine Tabelle mit Ventilstellungen gemäß einem Filtrationsmodus.
Fig. 6 zeigt eine Tabelle mit Ventilstellungen in einem Forward Flush Betriebszustand.
Fig. 7 zeigt anschaulich eine Filtrationseinheit in einem Backwash-Modus.
Fig. 8 zeigt anschaulich Ventilstellungen in dem Backwash-Modus.
Fig. 9 zeigt eine Tabelle mit Ventilstellungen in einem Backwash-Modus.
Fig. 10 zeigt eine Tabelle mit Ventilstellungen in einem Backwash-Modus.
Figuren 11A bis 11E zeigen verschiedene Stufen eines Filtrationszyklus.
Fig. 12 zeigt verschiedene Zyklen eines chemisch unterstützten Backwash-Verfahrens.
Figuren 13A bis 13D zeigen verschiedene Betriebszustände im Rahmen eines Integritätstests.
Fig. 14 ist eine Tabelle mit Ventilstellungen und Pumpenstatus in verschiedenen Betriebszuständen.
Fig. 15 zeigt ein Ablaufdiagramm in einem Filtrationsmodus.
Fig. 16 bis Fig. 18 zeigt Flussdiagramme gemäß eines Reinigungszyklus.
Fig. 19 zeigt ein Ablaufdiagramm gemäß eines Integritätstests.
Fig. 20 zeigt ein Flussdiagramm gemäß eines Stoppmodus.
Fig. 21 und Fig. 22 illustriert die Menüstruktur einer Steuereinrichtung gemäß einem exemplarischen Ausführungsbeispiel der Erfindung.

Die Darstellungen in den Figuren sind schematisch und nicht maßstäblich.

Gleiche oder ähnliche Komponenten in unterschiedlichen Figuren sind mit gleichen Bezugsziffern versehen.

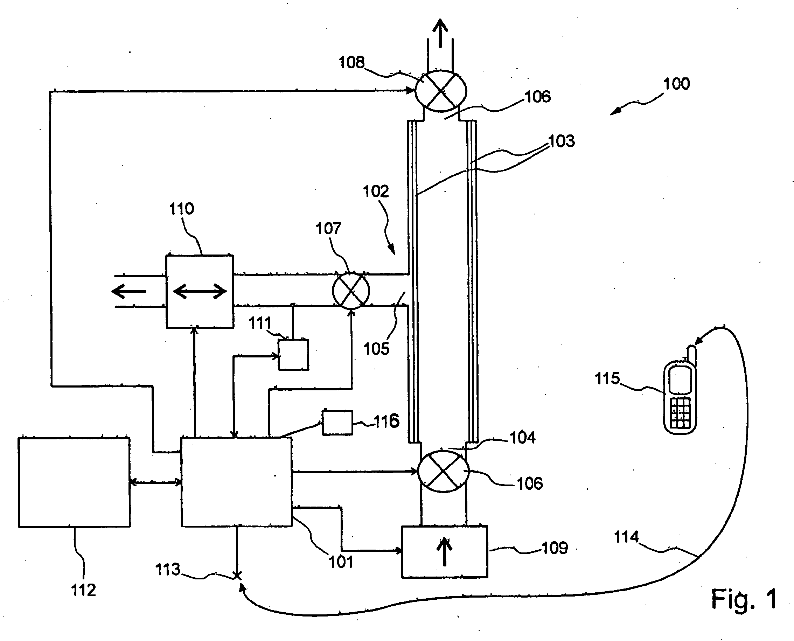

Im Weiteren wird bezugnehmend auf Fig. 1 eine Filtrationsanlage 100 gemäß einem exemplarischen Ausführungsbeispiel der Erfindung beschrieben.

Die Filtrationsanlage 100 weist eine Steuereinrichtung 101 auf, die als Mikroprozessor (CPU, "central processing unit") ausgeführt ist.

Die Filtrationsanlage 100 enthält einen Filterblock 102, dessen Herzstück eine Ultrafiltrationsmembran 103 ist. Die Ultrafiltrationsmembran 103 weist Poren in der Größenordnung von maximal 20 nm auf, sodass sie auch zum Entfernen von Viren aus zu reinigendem Wasser geeignet ist.

Die Filtrationsanlage 100 enthält einen Zuflussanschluss 104 zum Zuführen des zu filternden Trinkwassers zu der Ultrafiltrationsmembran 103. Ferner-enthält die Filtrationsanlage 100 einen Filterfluidanschluss 105 zum Abführen des mittels der Ultrafiltrationsmembran 103 gefilterten Trinkwassers. Die Filtrationsanlage 100 enthält darüber hinaus einen Abflussanschluss 106 zum Abführen von Wasser, das die Ultrafiltrationsmembran 103 nicht durchströmt hat.

Darüber hinaus ist bei der Filtrationsanlage 100 ein erstes Magnetventil 106, ein zweites Magnetventil 107 und ein drittes Magnetventil 108 vorgesehen. Die drei Magnetventile 106 bis 108 werden von der CPU 101 gesteuert, wodurch auch der Betriebszustand der Filtrationsanlage 100 definiert werden kann.

In einem ersten Betriebszustand, der als Filtermodus bezeichnet werden kann, wird das zu filternde Trinkwasser von dem Zuflussanschluss 104 durch die Ultrafiltrationsmembran 103 zu dem Filterfluidanschluss 105 befördert. In diesem Betriebszustand sind die ersten und zweiten Magnetventile 106, 107 geöffnet, und das dritte Magnetventil 108 ist geschlossen.

In einem Membranspülmodus zum Befördern des zu filternden Trinkwassers von dem Zuflussanschluss 104 entlang der Ultrafiltrationsmembran 103 zu dem Abflussanschluss 106 sind das erste und das dritte Magnetventil 106, 108 geöffnet, und das zweite Magnetventil 107 ist geschlossen.

In einem Rückflussmodus zum Befördern des Trinkwassers von dem Abflussanschluss 105 durch die Ultrafiltrationsmembran 103 zu dem Abflussanschluss 106 ist das erste Magnetventil 106 geschlossen, wohingegen das zweite und das dritte Magnetventile 107, 108 geöffnet sind.

Zum Befördern des Trinkwassers durch die Filtrationsanlage 100 ist eine erste Wasserpumpe 109 vorgesehen, und es ist eine zweite Wasserpumpe 110 vorgesehen. Gemäß dem beschriebenen Ausführungsbeispiel ist die erste Wasserpumpe 109 zum unidirektionalen Befördern von Wasser (in Pfeilrichtung) eingerichtet, wohingegen die zweite Wasserpumpe 110 derart eingerichtet ist, dass die Fluidförderrichtung einstellbar ist. Die zweite Wasserpumpe 110 kann integriert sein, kann aber auch durch einen Druckbehälter (entweder Membranausdehnungsgefäß oder andere, druckspeichernde Einheit (evtl. auch in Membranmodul integriert) ersetzt sein.

Die Filtrationsanlage 100 ist als Kleinanlage zur Trinkwasseraufbereitung für einen Haushalt (z.B. für ein Einfamilienhaus) vorgesehen, und kann daher an das öffentliche Wassernetz, wie es in einem Haushalt üblicherweise vorgesehen ist, angeschlossen werden.

Das öffentliche Wassernetz kann mit der ersten Wasserpumpe 109, die in einem offenen Zustand des ersten Magnetventils 106 das Wasser in den Innenraum zwischen den begrenzenden Membranwänden der Ultrafiltrationsmembran 103 befördert, oder direkt ohne zusätzliche Druckerhöhung direkt mit dem Ventil 106 gekoppelt sein, wobei in beiden Zuständen im Wesentlichen der gleiche Effekt erzielt wird. Ist das Ventil 107 geöffnet und das Ventil 108 geschlossen, so strömt das Wasser durch die Ultrafiltrationsmembran 103, wird dabei mittels Filtern von Viren, Bakterien und sonstigen Verunreinigungen mit einer Dimension kleiner der Porengröße der Ultrafiltrationsmembran 103 befreit, und kann, falls nötig durch eine weitere Druckerhöhung (hier die Wasserpumpe 110) als Nutzwasser einem Haushalt bereitgestellt werden.

Ist dagegen das zweite Magnetventil 107 geschlossen und das dritte Magnetventil 108 geöffnet, so kann das Spülwasser über den Abflussanschluss 106 einem Abfluss (nicht gezeigt) zugeführt werden.

Wie aus Fig. 1 ersichtlich, steuert die CPU 101 nicht nur die Magnetventile 106 bis 108, sondern auch die Pumpen 109, 110 und ist mit einem Manometer 111 gekoppelt, das einen Druck an der entsprechenden Stelle misst.

Darüber hinaus ist die CPU 101 mit einer Benutzerschnittstelle 112 gekoppelt, über welche ein Benutzer die CPU 101 mit Steuerinformation versorgen kann bzw. von der CPU 101 mit Informationen versorgt werden kann. Die Benutzerschnittstelle 112 kann eine graphische Benutzerschnittstelle (GUI, "graphical user interface") sein, die eine Anzeigeeinheit wie zum Beispiel eine LCD-Anzeige oder einen Plasmabildschirm aufweist. Ferner können Eingabeelemente bei der Benutzerschnittstelle 112 vorgesehen sein, wie eine Tastatur, ein Joystick, eine Maus, ein Touchscreen oder ein Mikrofon eines Sprachkennungssystems ("voice recognition system") oder eine Anschlußmöglichkeit zur Steuerung des System durch einen anschließbaren PC (z.B. durch einen seriellen oder parallelen, festverdrahteten oder drahtlosen Anschluß).

Die Steuereinrichtung 101 ist derart eingerichtet, dass sie in einem frei wählbaren Abstand (z.B. eine Stunde) jeweils einen Integritätstest zum Überprüfen der Funktionsfähigkeit der Filtrationsanlage 100, insbesondere der Ultrafiltrationsmembran 103, durchführt. Ferner ist in derCPU 101 eine Reaktionseinheit vorgesehen, die basierend aufeinem Ergebnis eines solchen Integritätstests ermittelt, wie das System 100 hierauf reagieren soll, und welcher die entsprechenden Maßnahmen ergreift, diese Reaktion in die Tat umzusetzen.

Zum Beispiel kann, wenn der Integritätstest ergibt, dass die Membran 103 möglicherweise geschädigt ist, die Anlage 100 abgeschaltet werden. Im Rahmen des Integritätstests kann zum Beispiel ein Luft- oder Gasdruck von 1 bar mittels der Pumpe an die angrenzende Fläche der Ultrafiltrationsmembran 103 angelegt werden. Aufgrund von Wasser, das in der Ultrafiltrationsmembran 103 gebinden ist, wird ein schneller Druckabbau dieses angelegten Überdrucks zwischen den beiden Membranseiten vermieden. Nur wenn der Druckabfall übermäßig schnell erfolgt, zum Beispiel weil die Membran 103 durch Risse oder Löcher geschädigt ist, wird die Funktionsfähigkeit der Ultrafiltrationsmembran 103 als mangelhaft beurteilt und die Filtrationsanlage 100 abgeschaltet. Der Druckabfall kann durch das Manometer 110 gemessen werden. Wenn der Druckabfall pro Zeiteinheit einen vorbestimmten Schwellenwert überschreitet, wird angenommen, dass die Ultrafiltrationsmembran 103 funktionsuntüchtig ist.

In einem solchen Fall schaltet die CPU 101 die Filtrationsanlage 100 nicht nur ab, sondern informiert über eine Sendeschnittstelle 113, die über ein Telekommunikationsnetzwerk 114 mit einem Mobilfunkempfänger 115 eines Benutzers in Kommunikationsverbindung steht, einen entsprechenden Alarm. Der Benutzer kann über die Benutzerschnittstelle 112 eine Mobilfunkverbindung eingeben, an die im Falle eines fehlgeschlagenen Integritätstests eine Alarmnachricht übermittelt werden soll. Mit anderen Worten wird eine SMS an den Benutzer über den Kommunikationspfad 114 übermittelt, aus welcher der Benutzer ersehen kann, dass die Ultrafiltrationsanlage nicht mehr ordnungsgemäß funktioniert. Darüber hinaus kann ein optischer oder akustischer Alarm über eine optische oder akustische Ausgabeeinheit 116 generiert werden, um auch lokal an der Filtrationsanlage 100 die mangelnde Funktionsfähigkeit anzuzeigen. Der Benutzer hat auch die Möglichkeit, definierte Befehle per SMS an die Schnittstelle 113 zu senden, um aus der Distanz Sofortmaßnahmen einzuleiten, z.B. kann so ein erneuter Integritätstest initiiert werden oder eine Abschaltung der Anlage solange verzögert werden; bis entweder die Filtermodule repariert oder ausgetauscht oder ein maximal tolerabler Zeitraum überschritten wurde.

Ist durch einen Benutzer oder durch Wartungspersonal die (defekte) Ultrafiltrationsmemibran 103 ausgetauscht worden, so führt die CPU 101 automatisch oder manuell ausgelöst einen Integritätstest durch, um die Funktionsfähigkeit der erneuerten Ultrafiltrationsmembran 103 zu überprüfen. Nur wenn der Test (zum Beispiel ein Drucktest wie oben beschrieben) das Ergebnis liefert, dass die Funktionsfähigkeit der Ultrafiltrationsmembran 103 nunmehr mangelfrei ist, schaltet die CPU 101 das System wieder an, und die Ventile 106 bis 1.08 sowie die Pumpen 109, 110 werden zum Erzeugen von gefiltertem Trinkwasser aus zugeführtem Trinkwasser angesteuert.

Die Abschaltung der Anlage erfolgt dergestalt, daß auch eine Außerbetriebnahme der Steuereinheit 101 z.B. durch Entfernen der Stromzufuhr nicht zu einer Außerkraftsetzung der Unterbrechung des Wasserstroms führt.

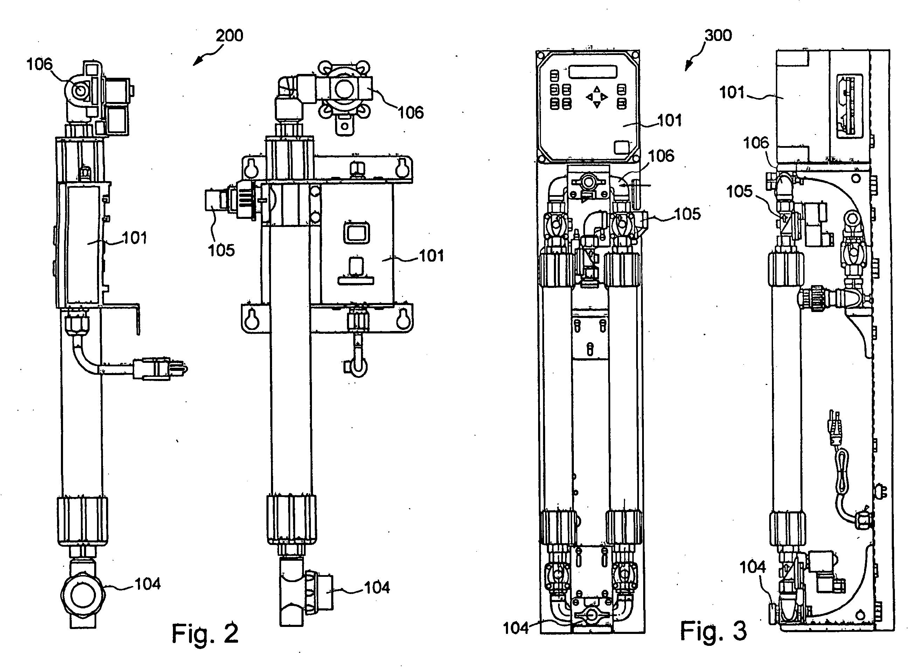

Im Weiteren wird bezugnehmend auf **Fig. 2** eine Filtrationsanlage 200 gemäß einem exemplarischen Ausführungsbeispiel der Erfindung beschrieben.

Fig. 2 zeigt zwei verschiedene Ansichten der Filtrationsanlage 200, die aufbauend auf einer Virex X-Spot Filtrationsanlage der Firma Seccua GmbH konstruiert ist. Entsprechend der bezugnehmend auf Fig. 1 beschriebenen Funktionalität ist die Steuereinrichtung 101 einer solchen Virex X-Spot Filtrationsanlage 200 entsprechend angepasst.

Im Weiteren wird bezugnehmend auf **Fig. 3** eine Ultrafiltrationsanlage 300 gemäß einem exemplarischen Ausführungsbeispiel der Erfindung beschrieben.

Die Ultrafiltrationsanlage 300 baut auf einer Virex 120 Filtrationsanlage auf, wie sie von der Firma Seccua GmbH vertrieben wird. Erfindungsgemäß ist die Steuereinheit 101 dieser Anlage erfindungsgemäß angepasst.

Bei der Ausführungsform nach Fig. 3 sind zwei parallele Filtermodule mit separaten Ultrafiltfationsmembranen vorgesehen, wohingegen im Ausführungsbeispiel nach Fig. 2 nur eine einzige Säule mit einer solchen Membran vorgesehen ist.

Eine Besonderheit dieser Ausführungsvariante liegt darin, daß eine Rückspülung des einen Filtermoduls auch durch daß gefilterte Wasser des Anderen stattfinden kann. Auch können mehr als 2 Module, z.B. 4 (jeweils 2 Module spülen 2 Andere zurück) oder 5 (jeweils 3 Module spülen 2 Andere zurück) usw. parallel betrieben werden. Analog zu Fig. 1, bei der das Wasser zur Rückspülung entweder von einem Druckbehälter oder einer Pumpe entgegen der Filtrationsrichtung durch die Membran gedrückt wird, liefert bei dieser Variante der Rückspülung dann entweder der erste Filter oder die erste Filtergruppe oder der zweite Filter oder die zweite Filtergruppe jeweils abwechselnd das Wasser zur Rückspülung.

Ausführungsbeispiele der Erfindung können auch in eine Virex 440 oder Virex 900 oder andere, neu zu entwickelnde Anlagen jeglicher Größe der Seccua GmbH implementiert werden.

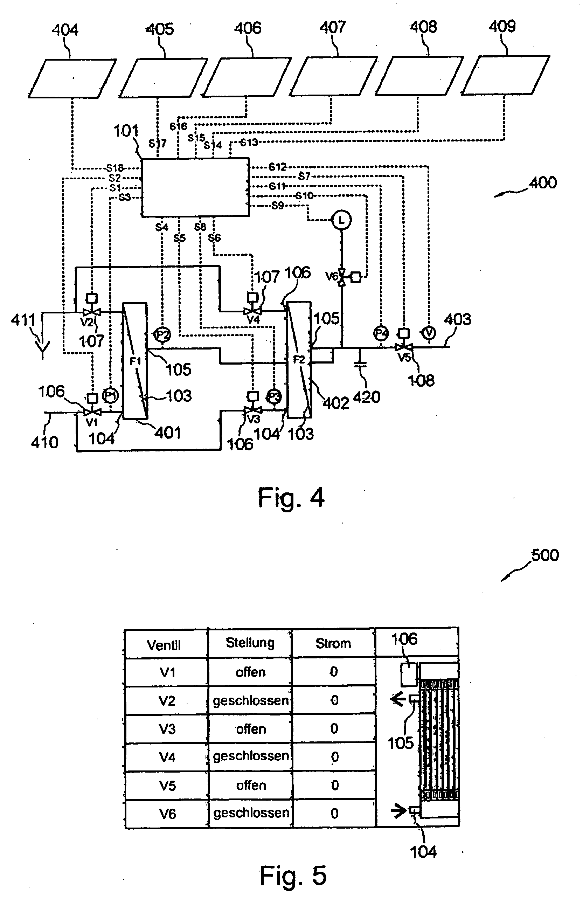

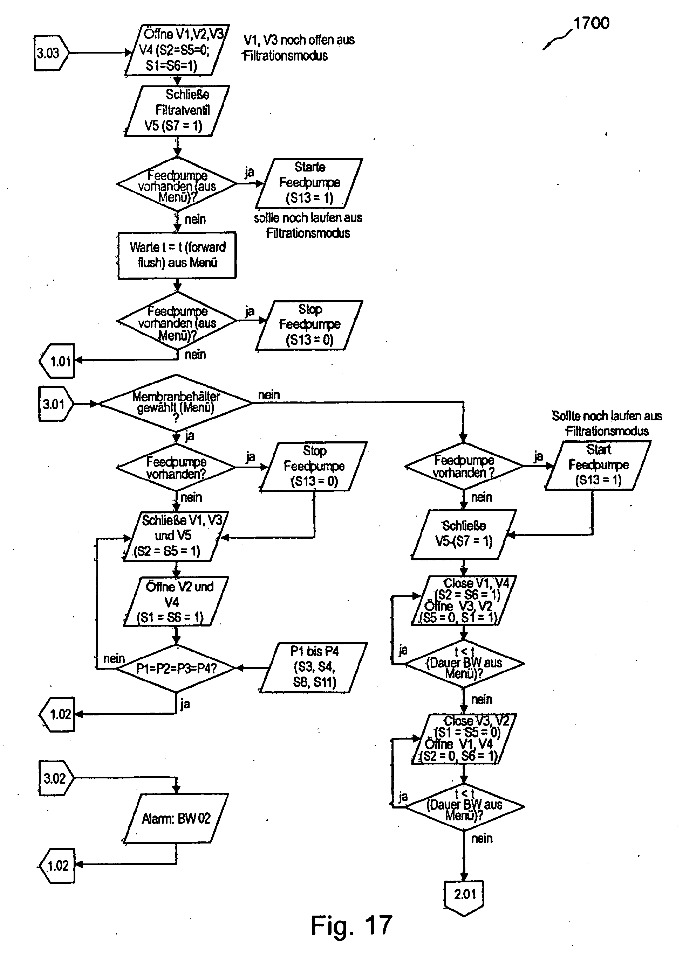

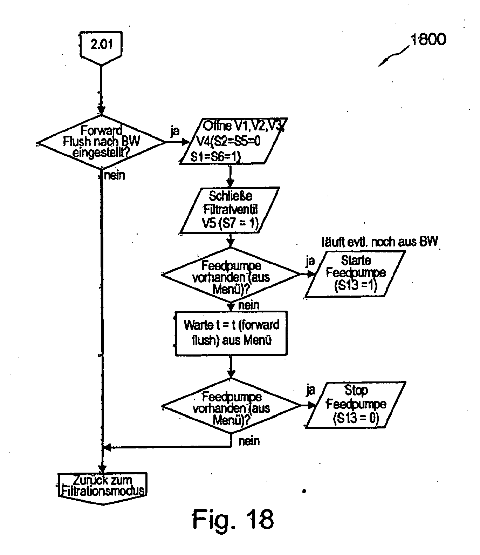

Im Weiteren wird bezugnehmend auf Fig. 4 bis Fig. 22 ein Filtrationssystem mit einer Steuereinrichtung gemäß einem exemplarischen Ausführungsbeispiel der Erfindung ausführlich beschrieben.

Im Unterschied zu Fig. 1 sind bei der Filtrationsanordnung 400 aus **Fig. 4** zwei Filtrationsmembranen in entsprechenden Modulen 401, 402 vorgesehen.

Ein globaler Zulauf ist mit Bezugszeichen 410 versehen, und ein globaler Spülwasserablauf ist mit Bezugszeichen 411 versehen. Das Filtrat ist an einem globalen Filtratanschluss 403 bereitgestellt.

Die CPU 101 hat eine Mehrzahl von angeschlossenen oder anschließbaren Komponenten, nämlich einen Signalausgang Display 404, einen Signaleingang Tastatur 405, einen Signalausgang Dosierpumpe Chemikalien Feed 406, einen Signalausgang Dosierpumpe Chemikalien BW 407, einen Signalausgang Backwash-Pumpe 408 und einen Signalausgang Feedpumpe 409.

Ferner sind eine Vielzahl von Ventilen und Sensoren vorgesehen, nämlich die Ventile V1 bis V5, die Magnet- oder Stellventile sein können und deren Schließzeit im zweiten Fall am Ventil oder in der Steuereinheit 101 einstellbar ist. V6 ist ein Magnetventil zur Steuerung der Druckluft oder des Druckgases während des Integritätstests. F1 und F2 sind Ultrafiltrationsmodule. L ist ein Druckluftkompressor in einem Bereich zwischen 0 bar und 1 bar. P1 bis P4 sind Drucksensoren in einem Messbereich von 0 bar bis 10 bar. V ist ein Volumenstrommesser, der die Menge des gefilterten Wassers mißt und kontinuierlich an die Steuereinheit 101 meldet.

Im Weiteren werden die Steuersignale beschrieben, die von derCPU 101 generiert werden können:
S1: Ansteuerung Ablaufventil V2
S2: Ansteuerung Zulaufventil V1
S3: Analoger Eingang Druckfühler Zulauf P1
S4: Analoger Eingang Druckfühler Filtrat P2
S5: Ansteuerung Zulaufventil V3
S6: Ansteuerung Ablaufventil V4
S7: Ansteuerung Filtratventil V5
S8: Analoger Eingang Druckfühler Zulauf P2
S9: Ansteuerung Druckluftkompressor L
S10: Ansteuerung Ventil Druckluft V6
S 11: Analoger Eingang Druckfühler Filtrat P4
S12: Volumenstrommesser Filtrat
S13: Ausgang Feedpumpe
S14: Ausgang Backwash-Pumpe
S15: Ausgang Dosierpumpe
S16: Ausgang Dosierpumpe Feed

Ferner ist in Fig. 4 ein Anschluss 420 als Anschlussmöglichkeit für einen Membranbehälter (Rückspülung) vorgesehen.

Im Weiteren wird der mit der Filtrationsanlage 400 durchführbare Prozess beschrieben.

Der Betrieb der Ultrafiltrationsanlage 400 wird in verschiedene Betriebszustände unterteilt, die durch die Ventilstellungen und den Pumpenstatus definiert werden. Eine definierte Abfolge von verschiedenen Betriebszuständen wird als Filtrationszyklus bezeichnet. Nach einer bestimmten Anzahl von Durchläufen des Filtrationszyklus kann eine chemisch unterstützte Rückspülung durchgerührt werden, falls erforderlich. Nach dieser chemisch unterstützten Rückspülung kann die saubere Membran hinsichtlich ihrer Integrität ("integrity test") getestet werden.

Im Betriebszustand Filtration findet die eigentliche Filtration statt. Es wird Wasser von der Zulaufstelle (Feed) durch die Membran auf die Filtratseite (Filtrat) gepresst. Optional kann während der Filtration durch das Signal S 16 eine Chemikaliendosierpumpe aktiviert werden, die während des Filtrationsvorganges zum Beispiel ein Flockungsmittel dosiert.

**Fig. 5** zeigt eine Tabelle 500 mit den Ventilstellungen während des Filtrationsbetriebszustands.

Beim Forward Flush wird die Membran überströmt, es findet kein Wasserstrom durch die Membran statt.

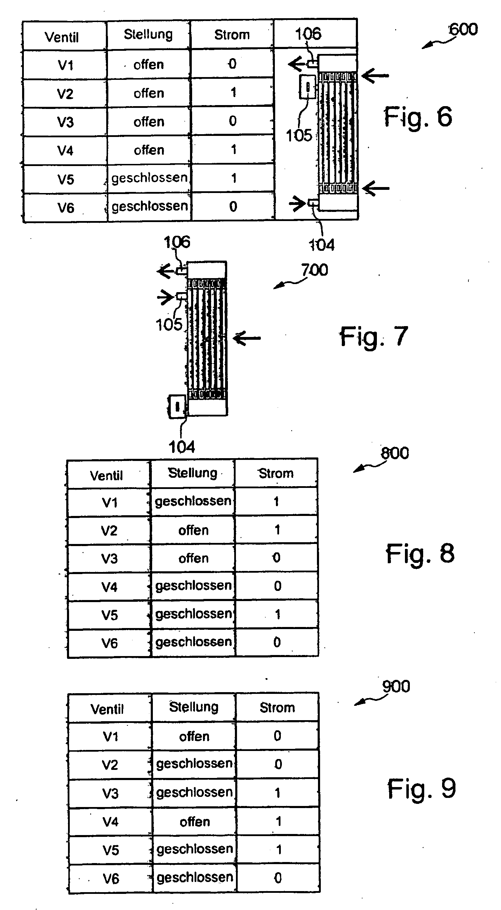

**Fig. 6** zeigt eine Tabelle 600, welche die Ventilstellungen in einem Forward Flush Betriebsmodus definiert.

Im Weiteren werden verschiedene Möglichkeiten für einen Backwash-Betriebszustand beschrieben.

Als Backwash wird die Rückspülung der Membran bezeichnet, d.h. von der Filtratseite wird Wasser durch die Membran auf die Zulaufseite(Feed) gedrückt und gelangt von dort in das Abwasser (Drain). Optional kann durch das Signal S15 eine Chemikaliendosierpumpe aktiviert werden (die zum Beispiel in einem "0"/" 1 "-Betrieb betrieben werden kann, aber auch volumenstromabhängig, gesteuert durch die Steuereinheit 101 in Verbindung mit dem integrierten Volumenstrommesser), die Reinigungschemikalien in das zur Spülung verwendete und gefilterte Wasser dosiert.

Erfindungsgemäß können insbesondere die beiden folgenden Möglichkeiten der Rückspülung eingesetzt werden:
- Das Filtrat des einen Modus spült das andere zurück. Das bedeutet, ein Modul befindet sich im Filtrationsmodus, das andere im Rückspülmodus, das Filtratventil V5 ist hierbei geschlossen. Nach Rückspülung des einen Moduls wechselt die Ventilstellung und das zweite Modul wird zurückgespult.
- Beide Module werden durch eine der Anlage nachgeschaltete Pumpe oder durch ein der Anlage nachgeschaltetes Membrangefäß zurückgespult.

**Fig. 7** zeigt eine Schemaskizze 700, welche die Flusscharakteristik in einem Backwash-Modus zeigt. Das Ausspülen des Schmutzwasser kann dabei entweder durch den Anschluß 106 oder den Anschluß 104 erfolgen oder wechselweise.

**Fig. 8** zeigt eine Tabelle 800 mit Ventilstellungen in einem Backwash-Modus in dem der Filter oder die Filtergruppe F1 durch das, von dem Filter oder der Filter-gruppe F2 gefiltertem Wasser zurückgespült wird.

**Fig. 9** zeigt eine Tabelle 900 mit Ventilstellungen in einem Backwash-Modus F2, in dem der Filter oder die Filtergruppe F2 durch das, von dem Filter oder der Filtergruppe F 1 zurückgespült wird

Es ist ebenfalls möglich, das Backwash beider Filtereinheiten durch nachgeschaltete Pumpen oder einen Druckbehälter (z.B. ein Membrangefäß oder lediglich eine natürliche Wassersäule) durchzuführen.

Hierbei befinden sich beide Module im Rückspülmodus. Zusätzlich wird die (gegebenenfalls frequenzgesteuerte) Rückspülpumpe durch Signal S14 aktiviert. Der Differenzdruck zwischen Filtrat und Zulaufseite bzw. Ablaufseite der Membran wird auf maximal 2.5 bar begrenzt.

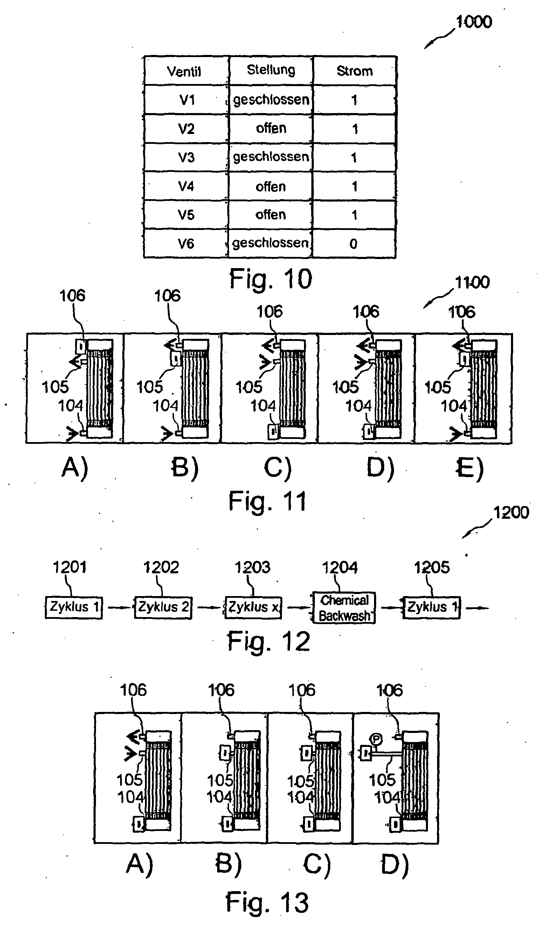

**Fig. 10** zeigt eine Tabelle 1000, in welcher die Ventilstellungen in einem solchen Backwash-Betriebsmodus gezeigt sind.

Fig. 11A bis Fig. 11E zeigen einen beispielhaften Filtrationszyklus.

In **Fig. 11A** ist ein Filtrationsmodus gezeigt. In **Fig. 11B** ist ein Forward Flush Betriebsmodus gezeigt. In **Fig. 11C** ist ein Backwash F1 Betriebsmodus gezeigt. In **Fig. 11D** ist ein Backwash F2 Betriebsmodus gezeigt. In **Fig. 11E** ist ein Forward Flush Betriebsmodus gezeigt.

Im Weiteren wird ein chemisch unterstützter Backwash-Betriebsmodus beschrieben.

Die Dosierung von Reinigungschemikalien bei der Rückspülung erfolgt optional und ist einstellbar für jeden x-ten Zyklus. Dann wird durch das Signal S15 die Dosierpumpe zur Dosierung von Reinigungschemikalien aktiviert (zum Beispiel unter Verwendung eines "0"/"1 "-Betrieb, es besteht aber auch die Möglichkeit, die Menge an dosierten Reinigungschemikalien abhängig vom, durch den integrierten Volumenstrommesser der Anlage gemessenen Rückspülvolumenstrom zu steuern).

**Fig. 12** stellt ein Schema 1200 eines solchen chemisch unterstützten Backwash-Betriebsmodus. Zunächst wird ein Zyklus 1 1201 durchlaufen, dann ein Zyklus 2 1202, und schließlich ein Zyklus X 1203. Danach erfolgt ein Chemical Backwash 1204, bevor wieder mit dem Zyklus 1 1201 begonnen wird. Jede andere Kombination der Verfahren ist möglich, um eine wirtschaftlich vorteilhafte oder optimierte Anlagenleistung zu ermöglichen. Grundsätzlich kann das beliebig kombiniert werden. Ein "chemical enhanced backwash" (CEB) kann auch alleine und ohne Einwirkzeit ausgeführt werden.

Im Weiteren wird ein Integritätstest beschrieben.

Fig. 13A bis Fig. 13D zeigen unterschiedliche Verfahrensschritte während eines, mit Druckluft oder Druckgas (z.B. Kohlendioxid) durchgeführten Integritätstests.

Wie in **Fig. 13A** gezeigt, kann zunächst eine Entwässerung auf der Permeatseite mit Druckluft (zum Beispiel 1 bar) erfolgen. Wie in **Fig. 13B** gezeigt, wird, sobald der gewünschte Druck erreicht wird (z.B. 1 bar) anschließend das Druckluftventil V6 geschlossen. Wie in **Fig. 13C** gezeigt, wird nachfolgend eine Wartezeit von zum Beispiel 30 Sekunden eingelegt. Wie in **Fig. 13D** gezeigt, wird anschließend der Druckverlust über die Zeit t gemessen, zum Beispiel für eine Dauer von 2 Minuten. Wenn der Druckverlust weniger als 10 mbar pro Minute beträgt, so wird von einer einwandfreien Funktion ausgegangen.

Nachfolgend kann ein Filtrationszyklus gestartet werden.

Im Weiteren wird der Betrieb des Steuermoduls 101 näher beschrieben.

Zunächst wird die Programmierung eines solchen Steuermoduls 101 beschrieben.

Hierbei wird von Zyklen, wie in Fig. 11A bis Fig. 11E gezeigt, ausgegangen. Jeder Betriebszustand wird durch die Ventilstellungen und die Pumpenstati definiert. Jeder Betriebszustand benötigt Eingabeparameter.

In einem Filtrations-Betriebsmodus können die Eingabeparameter die Dauer der Entlüftung vor dem Start der Filtration, die Dauer des Filtrationszyklus (Zeit, Filtratmenge oder beides), der Filtratvolumenstrom (falls Feedpumpe vorhanden), ein Schwellenwert dp für die Auslösung der Rückspülung, und eine Dosierung von Chemikalien im Zulauf sein.

In einem Forward Flush Betriebsmodus können die Eingabeparameter Forward Flush on/off oder die Dauer des Forward Flush sein.

In einem Rückspül-Betriebsmodus können die Eingabeparameter Rückspülung on/off, die Dauer der Rückspülung, die Rückspülung durch eine externe Pumpe oder ein Membrangefäß oder "ein Modul das Andere", bei jeder wievielten Rückspülung Chemie dosiert werden soll, und die Einweichzeit für Chemikalien (on/off, wie lange) sein.

In einem "Forward Flush nach Rückspülung," Betriebsmodus können die Eingabeparameter Forward Flush on/off und die Dauer des Forward Fiush sein.

Bei einem Integritätstests-Betriebsmodus können die Eingabeparameter der Abstand zwischen Integritätstest, die Dauer der Entwässerung, der Schwellenwert des Drucks für die Abschaltung des Kompressors, die Dauer der Ruhezeit nach der Entwässerung, der erlaubte Druckabfall pro Minute und die Dauer der Integritätsmessung sein.

Während eines Betriebszustandes werden verschiedene Bedingungen kontinuierlich überprüft. Wird eine Bedingung nicht erfüllt, ändert das Programm den Ablauf und meldet einen Alarm.

Zum Beispiel kann in einem Betriebszustand Filtration ein zu überwachender Parameter die Höhe des Differenzdrucks zwischen Zulaufseite und Filtratseite der Membranfilter (TMP), der TMP-Grenzwert und ein Volumenstrom sein. In einem Betriebszustand Rückspülung können die zu überwachenden Parameter die Höhe des TMP, der TMP-Grenzwert und der maximale Volumenstrom oder Druck an P2 sein.

In einem Betriebszustand Integritätstest kann der zu überwachende Parameter der Schwellenwert dp sein.

Eine chemisch unterstützte Rückspülung kann nach einer bestimmten Anzahl von Zyklen (einzustellen im Menü) und bei Überschreitung des Druckgrenzwertes der Filtration (TMP-Limit) stattfinden. Die Zyklen werden jeweils von der letzten chemischen Reinigung ab gezählt.

Im Weiteren werden verschiedene Alarmgruppen dargestellt, die beim Detektieren einer Fehlfunktion ausgelöst werden können.

Zunächst wird ein Betriebszustand Filtration beschrieben.

Gemäß einem Code F101 kann die Bedingung überprüft werden, ob P1-P2 größer als ein maximal erlaubter Wert dp ist, bzw. ob P3-P2 größer als ein maximal erlaubter Wert dp ist. In einem solchen Fall kann die Nachricht ergehen, dass die Membran verschmutzt ist. Ein Reinigungszyklus kann eingeleitet werden.

Mit einem Code F102 kann die Bedingung abgefragt werden, ob P1-P2 größer als der maximal erlaubte Wert dp ist bzw. ob P3-P2 größer als der maximale Wert dp ist, und zwar unmittelbar nach dem Reinigungszyklus. In einem solchen Fall kann die Nachricht ergehen, dass die Membran stark verschmutzt ist. Als Maßnahme kann eine chemisch unterstützte Rückspülung eingeleitet werden (falls vorhanden) oder es kann ein erneuter Reinigungszyklus durchgeführt werden.

Bei einem Code FI03 wird die Bedingung geprüft, ob der Volumenstrom unter dem eingegebenen Schwellenwert und dp kleiner als dieser Schwellenwert ist. Die Nachricht kann ergehen, dass das Rohwasser nicht ausreichend ist. Ferner kann eine Nachricht per SMS auf das Handy übermittelt werden.

Bei einem Code FI04 kann die Bedingung überprüft werden, ob der Volumenstrom unter dem eingegebenen Schwellenwert ist und ob dp trotz der Reinigung größer als der Schwellenwert ist. Es kann die Nachricht ergehen, dass die Membran, ausgetauscht werden soll. Eine solche entsprechende Nachricht kann per SMS auf ein Handy des Benutzers gesendet werden.

Bei einem Code FI05 kann die Bedingung abgefragt werden, ob P1 kleiner oder gleich P2 oder einem einstellbarem Schwellenwert ist. Dies kann die Nachricht auslösen, dass kein ausreichender Druck für die Filtration vorhanden ist. Eine entsprechende Nachricht kann per SMS auf das Handy übermittelt werden.

Bei einem Code FI06 wird die Bedingung überprüft, ob P3 kleiner oder gleich P2 oder einem einstellbarem Schwellenwert ist. In einem solchen Fall ergeht die Nachricht, dass kein ausreichender Druck für die Filtration vorhanden ist. Eine entsprechende Nachricht wird per SMS auf das Handy des Benutzers übermittelt. Im Weiteren werden Alarmzustände für den Betriebszustand Rückspülung beschrieben.

Bei einem Code BW01 wird überprüft, ob P2 kleiner 1.5 bar ist. Ist dies der Fall, so ergeht die Nachricht, dass kein ausreichender Druck für die Rückspülung vorhanden ist. Als Maßnahme wird BW weiter durchgeführt und der Benutzer benachrichtigt, daß die technische Ausrüstung zur Rückspülung (z.B. Pumpe, Membrangefäß oder anderer Druckbehälter, falls vorhanden) überprüft werden muss.

Mit einem Code BW02 wird die Bedingung geprüft, ob die Pumpe BW vorhanden ist und ferner, ob P-P3 oder P2-P1 größer 2.5 bar ist. Dann ergeht die Nachricht "Druckerhöhung Pumpe BW reduzieren".: Wenn die Pumpe BW frequenzgeregelt ist, dann wird der Druck gesenkt, wenn die Pumpe BW nicht frequenzgeregelt ist, dann wird die Pumpe BW ausgeschaltet, und der Benutzer wird benachrichtigt, daß die Rückspülpumpe überprüft werden muss.

Im weiteren werden verschiedene Alarmzustände für den Betriebszustand Integritätstest beschrieben.

Bei einem Code IT01 wird die Bedingung geprüft, ob P2 kleiner als 0.5 bar ist während der Entwässerung. Dann ergeht die Nachricht, dass der Kompressor überprüft werden soll. Diese Nachricht wird per SMS auf das Handy des Benutzers gesendet.

Bei einem Code IT02 wird die Bedingung geprüft, ob der Druckabfall während des eigentlichen Integritätstests (nach Entwässerung und Abschließen der Zu-, Ablaufventile(s) und des Filtratventils höher als ein Schwellenwert ist. Wenn der Druck schneller fällt als ein eingegebener Schwellenwert, dann erfolgt eine entsprechende Nachricht per SMS auf das Handy bzw. am Bedienteil, dass das Membranmodul defekt ist.

Als nächstes wird ein durchzuführender Integritätstest näher beschrieben.

Der Integritätstest für das Modul unterteilt sich in fünf Schritte:
- Zuerst werden die Ventile V1, V3 und danach V5 geschlossen. Dann wird V2, V4 und danach V6 geöffnet und ein definierter Druck zwischen 0.3 und 1 bar auf der Permeatseite aufgebracht (Standard 0.5 bar).
- Nach einer vordefinierten Zeit wird V6 geschlossen.
- Es wird eine definierte Pause von beispielsweise ca. 30 Sekunden eingelegt.
- Über einen festgelegten Zeitraum von beispielsweise ca. zwei Minuten wird der Druckabfall gemessen. Liegt der gemessene Wert über einem definierbaren Grenzwert (10 mbar/Min.), wird eine Alarmmeldung ausgegeben.
- Der Filtrationsmodus wird mit einer Entlüftung der Module eingeleitet.

Als nächstes werden die Aus- und Eingangssignale für die Filtrationsanlage 400 beschrieben.

Zunächst werden die Steuersignale für die Ventile, nämlich S1, S2, S5, S6, S7, S10 beschrieben.

Diese Signale werden zur Ansteuerung der auf der Anlage befindlichen Magnetventile verwendet. Außerdem erfolgt durch diese Signale auch die Stromversorgung der Ventile; sofern Ventile mit einer Gleichspannung von 12 Volt bei einer Leistung von 3.5 Watt eingesetzt werden. Die Ansteuerung erfolgt durch ein I/O-Signal, entsprechend der Normalstellung der Ventile werden diese bei Anlegen einer Spannung entweder geöffnet oder geschlossen. Von den anzusteuernden Ventilen erfolgt keinerlei Rückmeldung zur Steuerung.

Die Signale S3, S4, S8, S11 werden als Eingangssignal für die Druckmessung verwendet. Auf diesen Signalen erfolgt die Meldung der Druckmessung an verschiedenen Stellen in der Anlage, gemessen durch die Druckfühler P1 bis P3, an die Steuerung. Das Drucksignal rangiert in einer Breite von 4 bis 20 mA (0 bis 10 Volt) bei einer Druckmessung von 0 bis 10 bar.

Das Signal S9 dient der Stromversorgung und Steuerung des Druckluftkompressors.

Das Signal S9 liefert die Stromversorgung für den Druckluftkompressor, sofern dieser mit 12 V versorgt werden kann. Die Stromversorgung wird im Vorgang der Integritätsprüfung für max. 5 Minuten angelegt.

Das Signal S12 dient als Eingangssignal für den Volumenstrommesser. Zum Einbau in die Anlagen kann ein Volumenstrommesser vorgesehen sein, der auf dem Prinzip der Lichtschrankenmessung ein binäres Rechtecksignal an die Steuerung zurückliefert, das dann in der Steuerung ausgewertet werden muss. Ein Durchflussmengenmesser benötigt zum Beispiel eine Spannung von 24 Volt.

Ein Signal S13 steuert den Ausgang der Feedpumpe. In einigen Fällen wird zur Druckerhöhung von der Filtrationsanlage eine Druckerhöhungspumpe eingesetzt. Das Signal S13 kann nun insbesondere auf zwei verschiedene Weisen-eingesetzt werden:
- Zur filtratvolumenstromgeführten Steuerung einer drehzahlgeregelten Feedpumpe (4 bis 20 mA). Hierbei wird eine Pumpe derart gesteuert, dass immer eine konstante Filtratmenge produziert wird (Druckerhöhung bei Verschmutzung der Membran). Die gewünschte Filtratmenge ist im Menü einzustellen. Grenzwert für die Druckerhöhung der Membran ist eine maximale Druckdifferenz zwischen P1 und P2 oder P3 und P2 von 2.5 bar.
- Zur Schaltung eines Relais zum Ein- oder Ausschalten einer Pumpe je nach Anlagenstatus.

Das Signal S14 dient der Steuerung des Ausgangs der Backwash-Pumpe. In einigen Fällen wird zur Rückspülung der Anlage eine Backwash- (Rückspül-) Pumpe hinter der Anlage eingesetzt, die Wasser entgegen der Filtrationsrichtung durch die Anlage drückt. Auch diese Pumpe kann insbesondere auf zwei Arten angesteuert werden:
- Zur volumenstromgefiihrten Steuerung einer drehzahlgeregelten Pumpe (4 bis 20 mA). Hierbei wird dann die Pumpe derart gesteuert, dass immer eine konstante Flächenbelastung der Filter im Falle der Rückspülung erfolgt. Die gewünschte Flächenbelastung ist im Menü einzustellen. Grenzwert für die Druckerhöhung der Membran lässt eine gewünschte Druckdifferenz zwischen P2 und P1 oder P2 und P3 von 2.5 bar.
- Zur Schaltung eines Relais zum Ein- oder Ausschalten einer Pumpe je nach Anlagenstatus.

Ein Signal S15 dient der Steuerung des Ausgangs der Dosierpumpe Backwash. Optional kann während der Rückspülung eine Chemikaliendosierung (zum Beispiel Chlörbleichlauge oder Wasserstoffperoxid) erfolgen. Hierzu wird dann eine Dosierpumpe mit einem Signal von 4 bis 20 mA angesteuert. Aus Kostengründen soll die Ansteuerung binär erfolgen, die Regelung des Dosiervolumenstroms erfolgt an der Dosierpumpe und bleibt konstant.

Ein Signal S16 dient der Steuerung des Ausgangs der Dosierpumpe Feed. Optional kann während der Filtration eine Chemikaliendosierung im Zulauf zur Anlage erfolgen (zum Beispiel Flockungschemikalien). Hierzu wird dann eine Dosierpumpe mit einem Signal von 4 bis 20 mA angesteuert. Aus Kostengründen kann die Ansteuerung binär erfolgen, die Regelung des Dosiervolumenstroms erfolgt dann an der Dosierpumpe und bleibt konstant.

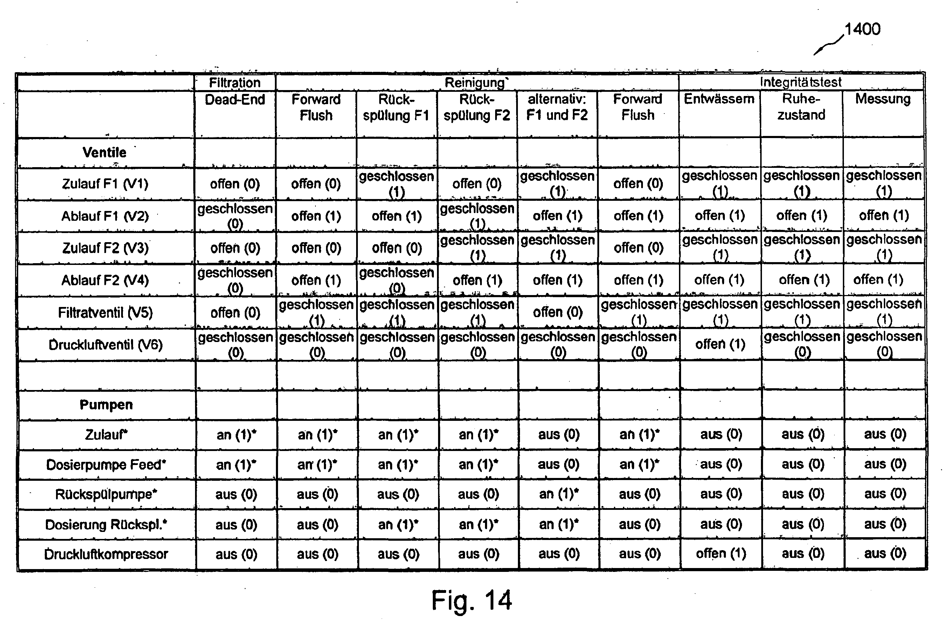

In **Fig. 14** ist eine Tabelle 1400 gezeigt, die Ventilstellungen und Pumpenstati beschreibt.

In den Klammern von Fig. 14 ist ein Betriebszustand mit Strom "an" mit (1) bzw. mit Strom "aus" mit (0) gekenntzeichnet, bei einer Pumpcnansteuerung optional 4 bis 20 mA fließen.

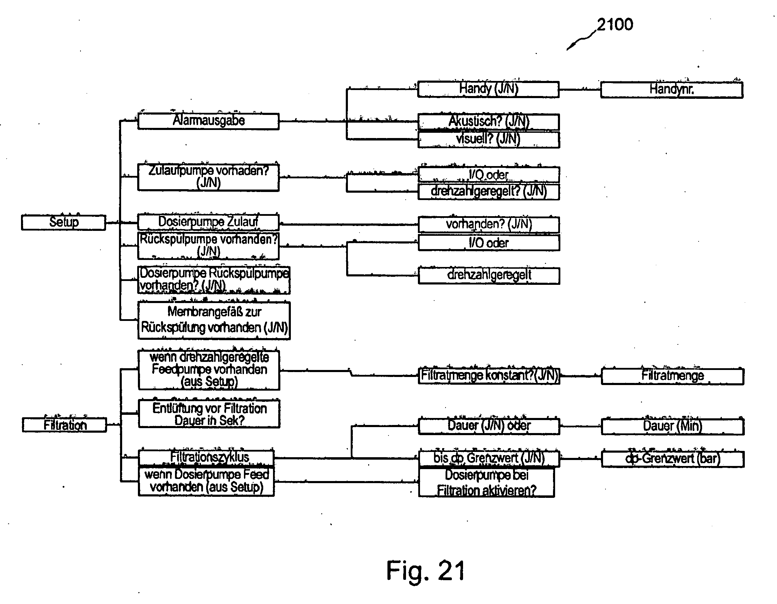

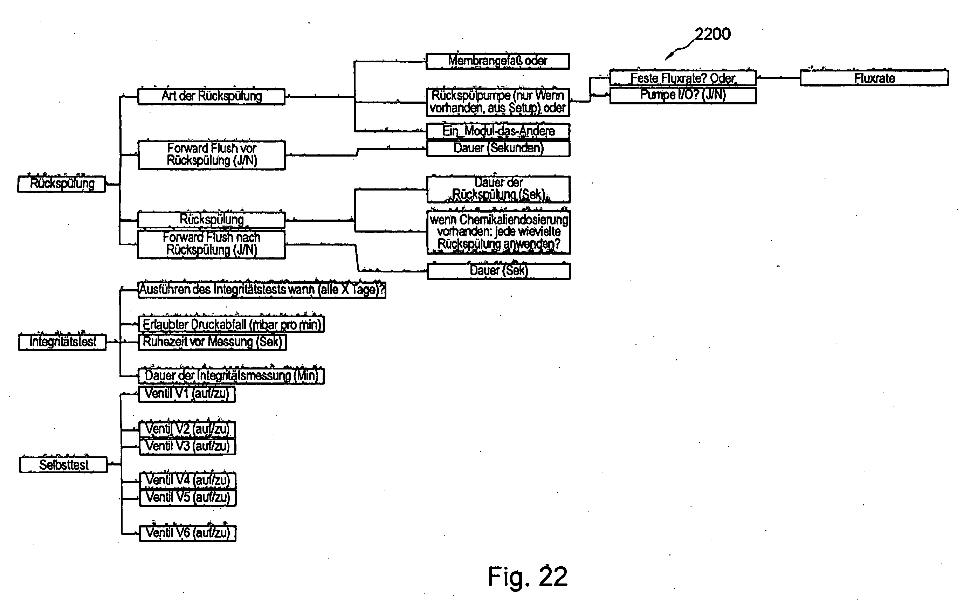

Ferner ist in der Filtrationsanlage 400 ein Menü mit Bedienteil und Anzeige vorgesehen. Die Menüstruktur ist in Fig. 21 und Fig. 22 beschrieben.

In diesem Menü erfolgt die Eingabe aller zum Betrieb der Anlage notwendigen Parameter. Die vollständige Programmierung kann erfolgen, wenn ein PC über eine in der Anlage vorhandene USB-Schnittstelle an die Steuerung angeschlossen wird. Die Menüoberfläche kann als HTML-Seite aufgebaut sein und so systemunabhängig in einen beliebigen Web-Browser auf dem PC bedient werden können. Das Bedienteil der Steuerung soll über ein Display verzügen, auf dem unter Anderem folgende Aufgabe erfolgen kann:
- Aktuell produzierte Filtratmenge
- Integrität Membran und Alarmmeldungen
- Möglichkeit der kodierten Alarmausgabe (zum Beispiel vierstellig)

Außerdem verfügt das Bedienteil der Steuerung über Taster, die eine Konfiguration der wichtigsten Parameter am Gerät ermöglichen.
- "Pfeiltasten auf-/ab" zur Steuerung durch das Menü
- "OK und Esc" zur Bestätigung oder Löschung einer getätigten Auswahl im Menü
- "Stopp" hält Filtration an ("Stopp-Modus")
- "Start" startet Filtrationsmodus aus dem Stopp-Modus

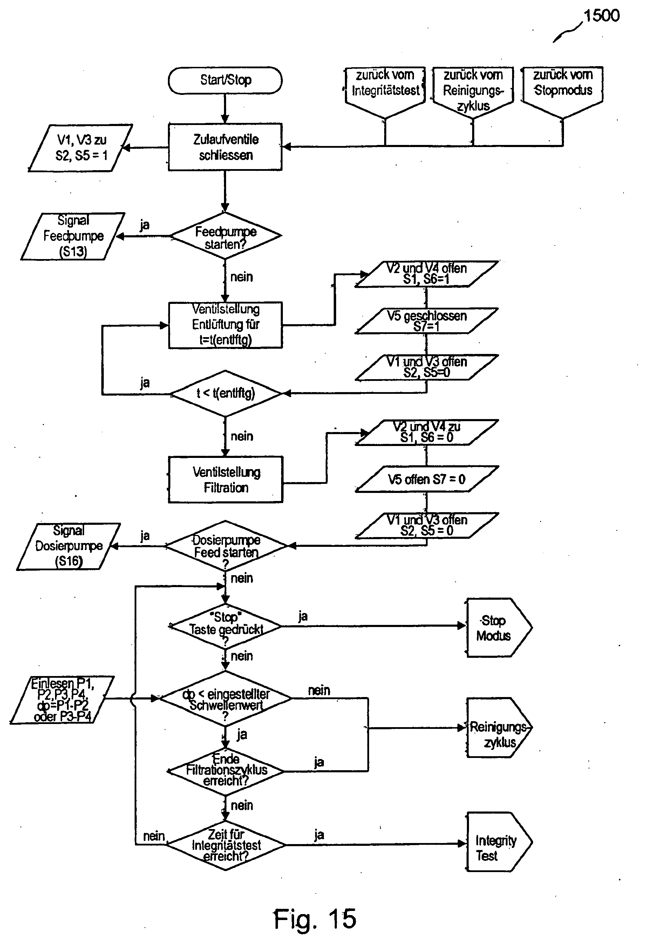

**Fig. 15** zeigt ein Flussdiagramm 500, das ein Ablaufdiagramm für den Betriebsmodus Filtration zeigt.

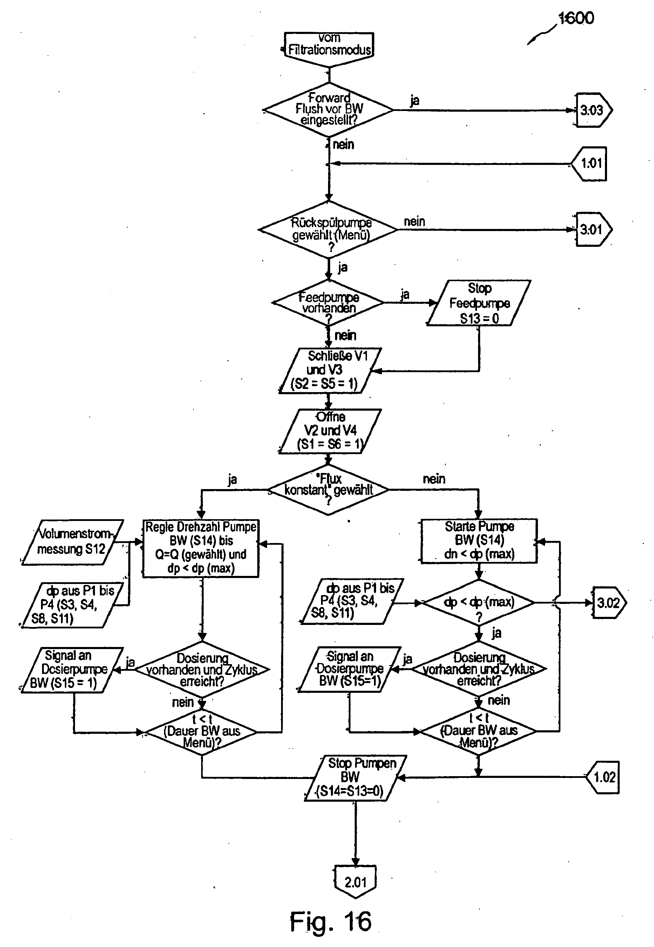

**Fig. 16** bis **Fig. 18** zeigen Flussdiagramme 1600, 1700,1800, die in Kombination den Betriebszustand Reinigungszyklus beschreiben.

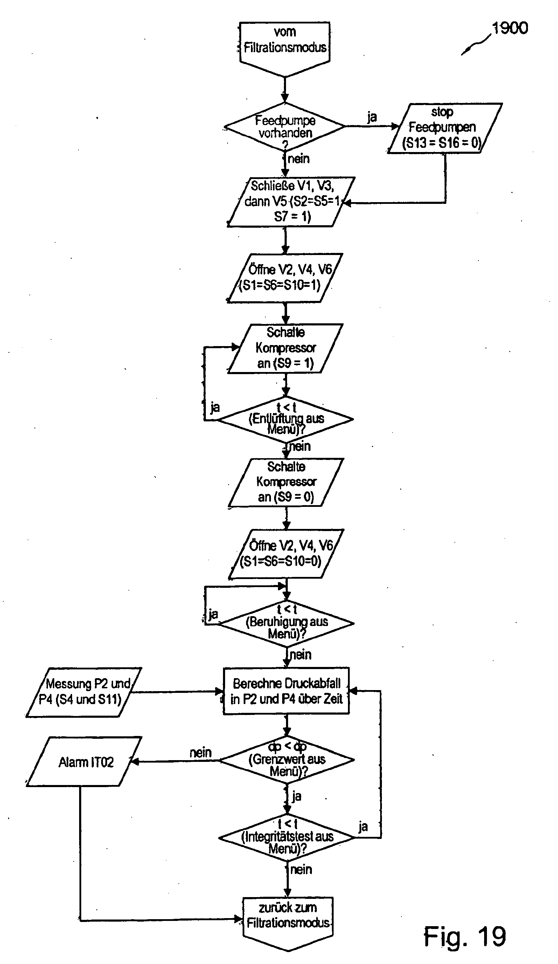

**Fig. 19** zeigt ein Ablaufdiagramm 1900, das einen Ablauf des Betriebszustands Integritätstest darstellt.

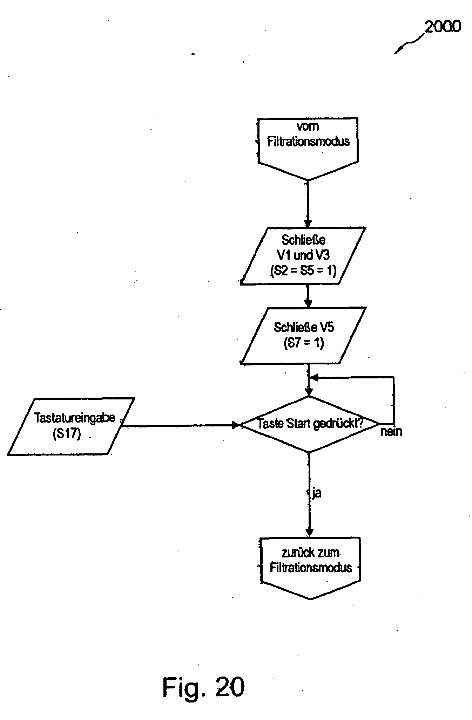

**Fig. 20** zeigt ein Flussdiagramm 2000, das Schritte eines Stoppmodus zeigt.

Wie bereits erwähnt, veranschaulichen **Fig. 21** und **Fig. 22** in Diagrammen 2100 und 2200 die Menüführung.

Zusammenfassend sind erfindungsgemäß Ultrafiltrationssysteme offenbart, die eine Filtration ermöglichen, bei denen eine Entfernung von Viren, Bakterien, Parasiten durch eine Porengröße kleiner als 20 nm ermöglicht ist. Es ist Rückspülung möglich, bei allen Modulen durch eine Pumpe auf der Filtratseite. Ferner ist es möglich, dass ein Modul das Andere in einem speziellen Rückspülmodus spült.

Die Rückspülung der Module kann durch Wasser erfolgen, das aus einem nachgeschalteten oder integrierten Druckbehälter auf der Filtratseite in die Module gedrückt werden kann. Ein Forward Flush Betriebsmodus ist vorgesehen. Feiner ist eine automatische Integritätsprüfung möglich. Der Filtrationsprozess kann bei nicht bestandenem Integritätstest gestoppt werden, die Wasserabgabe aus der Filtration wird dann unterbrochen. Ferner können Alarmmeldungen über SPS und Bluetooth ausgegeben werden. Die Programmierung erfolgt zum Beispiel über eine USB-Schnittstelle. Ferner ist eine Steuerung einer Chemikaliendosierung bei Rückspülung möglich. Es ist eine Steuerung einer Chemikaliendosierung im Zulauf ermöglicht. Die Zulaufpumpe kann ebenso gesteuert werden. Die Rückspülpumpe kann gesteuert werden. Darüber hinaus ist eine Messung des Filtratvolumenstroms möglich. Die Messung der Differenzdrücke kann über die Filter erfolgen. Die Spülzyklen können entsprechend der gemessenen Druckverluste gesteuert werden. Darüber hinaus ist die Software der Steuerung über eine Schnittstelle an eine aktualisierte Version anpassbar ("Upgrade"-Option) und die Sprache der Anzeigen, Menüs und Bedienoberflächen in verschiedenen Sprachen ausführbar.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Filtrationsanlage (100) zum Filtern eines Fluids,
wobei die Filtrationsanlage eine Steuereinrichtung (101) für die Filtrationsanlage aufweist, wobei die Steuereinrichtung aufweist:
eine Integritätstestemheit zum Durchführen eines Integritätstests zum Überprüfen der Funktionsfähigkeit der Filtrationsanlage;
eine Reaktionseinheit zum Ermitteln einer Reaktion basierend auf einem Ergebnis des Integritätstests;
wobei die Reaktionseinheit eingerichtet ist, im Falle einer mittels der Integritätstesteinheit ermittelten fehlenden Funktionstähigkeit der Filtrationsanlage als Reaktion eine Alarmmeldung zu generieren;
wobei die Alarmmeldung eine Fenrstreckenbenachrichtigung eines Benutzers aufweist,
wobei die Fernstreckenbenachrichtigung mittels eines Mobilfunknetz-Kommunikationspfads (114) durchführbar ist;
wobei die Steuereinrichtung über die Fernstrcekenverbindung bidirektional kommunizierfähig mit dem Benutzer eingerichtet ist und ferner eingerichtet ist, den Benutzer über eine SMS oder eine MMS darüber in Kenntnis zu setzen, dass die Filtrationsanlage möglicherweise nicht einwandfrei arbeitet;
wobei eine Schnittstelle (113) vorgesehen ist, an die der Benutzer definierte Befehle per SMS senden kann, um aus der Distanz Sofortmaßnahmen einzuleiten; wobei die Filtrationsanlage mindestens eine Filtermembran (103) zum Filtern des Fluids aufweist und als Kleinanlage zur Trinkwasseraufbereitung für den Bedarf eines Haushalts oder einer Wohnanlage eingerichtet und dimensioniert ist.

2. Filtrationsanlage nach Anspruch 1,
wobei die Integritätstesteinheit zum Überprüfen der Funktionsfähigkeit der Filtermembran (103) mittels Beförderns und Detektierens einer im funktionsfähigen Zustand der Filtermembran für die Filtermembran im Wesentlichen undurchlässigen Testsubstanz eingerichtet ist und/oder wobei die integritätstesteinheit zum Überprüfen der Funktionsfähigkeit der Filtermembran mittels Anlegens eines Testdrucks an die Filtermembran und mittels Detektierens des Zeitverhaltens des Testdrucks an der Filtermembran eingerichtet ist.

3. Filtrationsanlage nach einem der Ansprüche 1 bis 2,
wobei die Reaktionseinheit eingerichtet ist, im Falle einer mittels der Integritätstesteinheit ermittelten fehlenden Funktionsfähigkeit der Filtrationsanlage als Reaktion zumindest einen Teil der Filtrationsanlage abzuschalten.

4. Filtrationsanlage nach einem der Ansprüche 1 bis 3,
aufweisend eine Wiederinbetriebnahmeeinheit, die zum Ermitteln einer wiederhergestellten Funktionsfähigkeit der hiltrationsanlage nach einer Fehlfunktion und zur Wiederinbetriebnalme der Filtrationsanlage eingerichtet ist.

5. Filtrationsanlage nach einem der Ansprüche 1 bis 4,
wobei die Steuereinrichtung als monolithisch integrierter Schaltkreis eingerichtet ist.

6. Filtrationsanlage nach einem der Ansprüche 1 bis 5,
wobei die mindestens eine Filtermembran aus der Gruppe bestehend aus einer Feinfiltermembran, einer Mikrofiltermembran, einer Ultrafiltermembran und einer Nanofiltermembran ausgewählt ist.

7. Filtrationsanlage nach Anspruch 6,
aufweisend einen Zuflussanschluss (104) zum Zuführen des zu filternden Fluids zu der Filtermembran, und/oder einen Filterfluidanschluss (105) zum Abführen des mittels der Filtermembran gefilterten Fluids und/oder einen Abflussanschluss (106) zum Abführen von Fluid, das die Filtermembran nicht durchströmt hat.

8. Filtrationsanlage nach Anspruch 7,
aufweisend mindestens ein Ventil (106,107, 108), wobei mittels des mindestens einen Ventils ein Betriebszustand von zumindest einem aus der Gruppe bestehend aus dem Zuflussanschluss, dem Filterfluidanschluss und dem Abllussanschluss einstellbar ist, wobei vorzugsweise die Steuereinrichtung (101) zum Steuern des mindestens einen Ventils eingerichtet ist, und wobei besonders bevorzugt die Steuereinrichtung zum Steuern des mindestens einen Ventils zum Einstellen eines Betriebsmodus ausgewählt aus der Gruppe bestehend aus einem Filtermodus zum Befördern des Fluids von dem Zuflussanschluss durch die mindestens eine Filtermembran (103) zu dem Filterfluidanschluss (105), einem Membranspülmodus zum Befördern des Fluids von dem Zuflussanschluss entlang der mindestens einen Filtermembran zu dem Abflussanschluss (106), und einem Rückflussmodus zum Befördern des Fluids von dem Filtertluidunschluss durch die mindestens eine Filtermembran zu dem Abflussanschluss (106) eingerichtet ist.

9. Filtrationsanlage nach einem der Ansprüche 1 bis 8,
aufweisend mindestens eine Pumpe (109) oder eine Einrichtung zum Nutzbarmachen eines natürlichen Vordrucks zum Befördern des Fluids durch die Filtrationsanlage und/oder eingerichtet zur Entkeimung von Trinkwasser und/oder Brauchwasser.

10. Verfahren zum Steuern einer filtrationsanlage zum Filtern eines Fluids, wobei die Filtrationsanlage mindestens eine Filtermembran zum Filtern des Fluids aufweist und als Kleinanlage zur Trinkwasseraufbereitung für den Bedarf eines Haushalts oder einer Wohnanlage eingerichtet und dimensioniert ist, wobei das Verfahren aufweist:
Durchführen eines Integritätstests zum Überprüfen der Funktionsfähigkeit der Filtrationsanlage;
Ermitteln einer Reaktion basierend auf einem Ergebnis des Integritätstests;
Generieren einer Alarmmeldung im Falle einer mittels des Integritätstests ermittelten fehlenden Funktionsfähigkeit der Filtrationsanlage als Reaktion;
wobei die Alarmmeldung eine Fernstreckenhenachrichtigung eines Benutzers aufweist,
wobei die Fernstreckenbenachrichtigung mittels eines Mobilfunknetz-Kommunikationspfads (114) durchgeführt wird;
wobei die Fernstreckenverbindung bidirektional kommunizierfähig mit dem Benutzer ausgebildet ist;
wobei der Benutzer über eine SMS oder eine MMS darüber in Kenntnis gesetzt wird, dass die Filtrationsanlage möglicherweise nicht einwandfrei arbeitet;
wobei der Benutzer definierte Befehle per SMS an eine Schnittstelle (113) sendet, um aus der Distanz Sofortmaßnahmen einzuleiten.

11. Computerlesbares Speichermedium, in dem ein Programm zum Steuern einer Filtrationsanlage gemäß einem der Ansprüche 1 bis 9 zum Filtern eines Fluids gespeichert ist, welches Programm, wenn es von einem Prozessor ausgeführt wird, das Verfahren nach Anspruch 10 steuert oder durchführt.

12. Programm-Element zum Steuern einer Filtrationsanlage gemäß einem der Ansprüche 1 bis 9 zum Filtern eines Fluids, das, wenn es von einem Prozessor ausgeführt wird, das Verfahren nach Anspruch 10 steuert oder durchführt.

13. Anordnung, aufweisend
eine Filtrationsanlage nach einem der Ansprüche 1 bis 9,
einen Mobilfünkempfänger (115) eines Benutzers, wobei der Mobilfunkempfänger mit der Schnittstelle (113) der Filtrationsanlage in Kommunikationsverbindung steht.

## Claims

1. A filtration unit (100) for filtering a fluid,
wherein the filtration unit comprises a control device (101) for the filtration unit, wherein the control device comprises:
an integrity test unit for performing an integrity test for checking the functioning of the filtration unit;
a reaction unit for determining a reaction based on a result of the integrity test;
wherein the reaction unit is configured to generate an alarm message as the reaction if the functioning of the filtration unit is compromised as identified by the integrity test unit;
wherein the alarm message comprises a remote link notification to a user;
wherein the remote link notification is performable by a mobile network communication path (114);
wherein the control device is configured to be capable of bidirectionally communicating with the user via the remote link notification and is further configured to inform the user by an SMS or an MMS that the filtration unit possibly does not work correctly;
wherein an interface (113) is provided to which the user can send defined instructions by SMS in order to trigger an emergency procedure from a remote position;
wherein the filtration unit comprises at least one filtration membrane (103) for filtering the fluid and is configured and dimensioned as a small scale system for the treatment of drinking water being dimensioned for the need of a household or a housing area.

2. Filtration unit according to claim 1, wherein the integrity test unit is configured for checking the functional integrity of the filter membrane (103) by conveying and detecting a test substance being substantially impermeable to the filter membrane in the functional state of the filter membrane and/or wherein the integrity test unit is configured for checking the functional integrity of the filter membrane by applying a test pressure to the filter membrane and by measuring the time response of the test pressure at the filter membrane.

3. Filtration unit according to any of claims 1 or 2, wherein the reaction unit is configured to switch off at least a part of the filtration unit as the reaction if the functional integrity of the filtration unit is compromised as identified by the integrity test unit.

4. Filtration unit according to any of claims 1 to 3, further comprising a restart unit configured for identifying a restored functional integrity of the filtration unit after a malfunction and for restarting the filtration unit.

5. Filtration unit according to any of claims 1 to 4, wherein the control device is configured as a monolithically integrated circuit.

6. Filtration device according to any of claims 1 to 5, wherein the at least one filter membrane is selected from the group consisting of a fine filter membrane, a micro filter membrane, an ultra filter membrane, and a nano filter membrane.

7. Filtration unit according to claim 6, comprising a supply connection (104) for supplying the fluid to be filtered to the filter membrane and/or a filter fluid connection (105) for discharging the fluid filtered by the filter membrane and/or a drain connection (106) for draining fluid that has not flown through the filter membrane.

8. Filtration unit according to claim 7,
comprising at least one valve (106, 107, 108), wherein, by the at least one valve, an operation mode of at least one of the group consisting of the supply connection, the filter fluid connection and the drain connection is selectable, wherein preferably the control device (101) is configured for controlling the at least one valve, and wherein particularly preferably the control device is configured for controlling the at least one valve for adjusting an operation mode selected from the group consisting of a filtration mode for conveying the fluid from the supply connection through the at least one filter membrane (103) to the filter fluid connection (105), a membrane flush mode for conveying the fluid from the supply connection along the at least one filter membrane to the drain connection (106), and a back flow mode for conveying the fluid from the filter fluid connection through the at least one filter membrane to the drain connection (106).

9. Filtration unit according to any of claims 1 to 8,
comprising at least one pump (109) or an arrangement for making use of a natural bias pressure for conveying the fluid through the filtration unit and/or configured for disinfecting drinking water and/or service water.

10. A method of controlling a filtration unit for filtering a fluid, wherein the filtration unit comprises at least one filtration membrane for filtering the fluid and is configured and dimensioned as small scale system for drinking water treatment for the need of a household or a housing area, wherein the method comprises:
performing an integrity test for checking the functioning of the filtration unit;
determining a reaction based on a result of the integrity test;
generating an alarm message as the reaction if the functioning of the filtration unit is compromised as identified by the integrity test;
wherein the alarm message comprises a remote link notification to a user;
wherein the remote link notification is performed by a mobile network communication path (114);
wherein the remote link notification is formed to be capable of bidirectionally communicating with the user;
wherein the user is informed by an SMS or an MMS that the filtration unit possibly does not work correctly;
wherein the user sends defined instructions per SMS to an interface (113) in order to trigger emergency measures from the distance.

11. Computer readable storage medium in which a program for controlling a filtration unit according to any of claims 1 to 9 for filtering a fluid is stored, which program, when being executed by a processor, controls or carries out the method according to claim 10.

12. Program element for controlling a filtration unit according to any of claims 1 to 9 for filtering a fluid, which, when being executed by a processor, controls or carries out the method according to claim 10.

13. Arrangement, comprising
a filtration unit according to any of claims 1 to 9,
a mobile communications receiver (115) of a user, wherein the mobile communications receiver is in communicative connection with the interface (113) of the filtration unit.

## Revendications

1. Installation de filtration (100) pour filtrer un fluide,
ladite installation de filtration comportant un dispositif de commande (101) pour l'installation de filtration, le dispositif de commande (101) comportant :
une unité de test d'intégrité pour la mise en oeuvre d'un test d'intégrité pour contrôler le bon fonctionnement de l'installation de filtration ;
une unité de réaction pour déterminer une réaction basée sur un résultat du test d'intégrité ;
l'unité de réaction étant réalisée pour générer une réaction sous forme de message d'alarme dans le cas où un dysfonctionnement de l'installation de filtration est déterminé au moyen du test d'intégrité ;
ledit message d'alarme contenant un télé- avertissement pour un utilisateur,
le télé-avertissement pouvant être transmis au moyen d'une voie de communication (114) d'un réseau de radiotéléphonie mobile ;
le dispositif de commande étant réalisé pour pouvoir communiquer de manière bidirectionnelle avec l'utilisateur via une liaison à distance, et étant réalisé, en outre, pour informer l'utilisateur via un SMS ou un MMS que l'installation de filtration ne fonctionne peut-être pas correctement ;
une interface (113) étant prévue vers laquelle l'utilisateur peut émettre via SMS des instructions définies pour déclencher à distance des mesures d'urgence ;
l'installation de filtration comportant au moins une membrane de filtration (103) pour filtrer le fluide et étant dimensionnée sous forme d'installation de petit format pour la préparation d'eau potable pour les besoins d'un ménage ou d'un ensemble résidentiel.

2. Installation de filtration selon la revendication 1, dans laquelle l'unité de test d'intégrité est réalisée pour contrôler le bon fonctionnement de la membrane de filtration (103) moyennant le transport et la détection d'une substance d'essai, sensiblement imperméable à la membrane de filtration dans l'état de bon fonctionnement de la membrane de filtration, et/ou dans laquelle l'unité de test d'intégrité est réalisée pour contrôler le bon fonctionnement de la membrane de filtration moyennant l'application d'une pression d'essai sur la membrane de filtration et moyennant la détection du comportement en fonction du temps de la pression d'essai sur la membrane de filtration.

3. Installation de filtration selon l'une quelconque des revendications 1 à 2, dans laquelle l'unité de réaction est réalisée pour générer une réaction consistant à déconnecter au moins une partie de l'installation de filtration dans le cas où l'unité de test d'intégrité détecte un dysfonctionnement de l'installation de filtration.

4. Installation de filtration selon l'une quelconque des revendications 1 à 3, comportant une unité de remise en marche, qui est réalisée pour déterminer le rétablissement du bon fonctionnement de l'installation de filtration à la suite d'un dysfonctionnement et pour remettre en marche l'installation de filtration.

5. Installation de filtration selon l'une quelconque des revendications 1 à 4, dans laquelle le dispositif de commande est réalisé sous la forme d'un circuit de commande intégré monolithique.

6. Installation de filtration selon l'une quelconque des revendications 1 à 5, dans laquelle ladite au moins une membrane de filtration est choisie dans le groupe constitué d'une membrane de filtration fine, d'une membrane de microfiltration, d'une membrane d'ultrafiltration et d'une membrane de nanofiltration.

7. Installation de filtration selon la revendication 6, comportant un raccord d'admission (104) pour l'acheminement du fluide à filtrer vers la membrane de filtration, et/ou un raccord de fluide filtré (105) pour l'évacuation du fluide filtré au moyen de la membrane de filtration, et/ou un raccord d'évacuation (106) pour l'évacuation du fluide qui ne traverse pas la membrane de filtration.

8. Installation de filtration selon la revendication 7, comportant au moins une vanne (106, 107, 108), ladite au moins une vanne permettant de régler un état de fonctionnement d'au moins un raccord choisi dans le groupe constitué du raccord d'admission, du raccord de fluide filtré et du raccord d'évacuation, de préférence le dispositif de commande (101) étant réalisé pour commander ladite au moins une vanne, et encore mieux, le dispositif de commande étant réalisé pour commander ladite au moins une vanne pour le réglage d'un mode de fonctionnement choisi dans le groupe constitué d'un mode de filtration pour transporter le fluide depuis le raccord d'admission vers le raccord de fluide filtré (105) en passant par ladite au moins une membrane de filtration (103), d'un mode de lavage de la membrane pour transporter le fluide depuis le raccord d'admission vers le raccord d'évacuation (106) en passant le long de ladite au moins une membrane de filtration, et d'un mode de renvoi pour transporter le fluide depuis le raccord de fluide filtré vers le raccord d'évacuation (106) en passant à travers ladite au moins une membrane de filtration.

9. Installation de filtration selon l'une quelconque des revendications 1 à 8, comportant au moins une pompe (109) ou un dispositif pour exploiter une pression préliminaire naturelle permettant de transporter le fluide à travers l'installation de filtration et/ou étant réalisée pour dégermer l'eau potable et/ou les eaux résiduaires.

10. Procédé pour commander une installation de filtration pour filtrer un fluide, ladite installation de filtration comportant au moins une membrane de filtration pour filtrer le fluide et étant réalisée et dimensionnée sous forme d'installation de petit format pour la préparation d'eau potable pour les besoins d'un ménage ou d'un ensemble résidentiel, le procédé comportant :
la mise en oeuvre d'un test d'intégrité pour contrôler le bon fonctionnement de l'installation de filtration ;
la détermination d'une réaction basée sur un résultat du test d'intégrité ;
la génération d'un message d'alarme en tant que réaction dans le cas d'un dysfonctionnement de l'installation de filtration, déterminé par le test d'intégrité ;
ledit message d'alarme contenant un télé-avertissement pour un utilisateur,
le télé-avertissement étant transmis au moyen d'une voie de communication (114) d'un réseau de radiotéléphonie mobile ;
la communication à distance étant réalisée pour pouvoir communiquer de manière bidirectionnelle avec l'utilisateur ;
l'utilisateur étant informé via un SMS ou un MMS que l'installation de filtration ne fonctionne peut-être pas correctement ;
l'utilisateur envoyant des instructions définies via SMS à une interface (113), afin de déclencher à distance des mesures d'urgence.

11. Support de mémoire pouvant être lu par un ordinateur, dans lequel est mémorisé un programme pour commander une installation de filtration selon l'une quelconque des revendications 1 à 9 pour filtrer un fluide, ledit programme, lorsqu'il se déroule sur un processeur, commandant ou mettant en oeuvre le procédé selon la revendication 10.

12. Élément de programme pour commander une installation de filtration selon l'une quelconque des revendications 1 à 9 pour filtrer un fluide, lequel élément, lorsqu'il se déroule sur un processeur, commande ou met en oeuvre le procédé selon la revendication 10.

13. Système comportant
une installation de filtration selon l'une quelconque des revendications 1 à 9,
un récepteur de radiotéléphonie mobile (115) d'un utilisateur, ledit récepteur de radiotéléphonie mobile étant en liaison de communication avec l'interface (113) de l'installation de filtration.
